(19) Europäisches Patentamt
European Patent Office
Office européen des brevets

(11) **EP 4 708 416 A1**

(12) **EUROPEAN PATENT APPLICATION**
published in accordance with Art. 153(4) EPC

(43) Date of publication:
**11.03.2026  Bulletin 2026/11**

(21) Application number: **24797407.4**

(22) Date of filing: **24.04.2024**

(51) International Patent Classification (IPC):
**H01M 8/22** (2006.01)   **H01M 14/00** (2006.01)

(52) Cooperative Patent Classification (CPC):
**H01M 8/22; H01M 14/00**

(86) International application number:
**PCT/KR2024/005539**

(87) International publication number:
**WO 2024/225752 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **25.04.2023  KR 20230053665**

(71) Applicant: **Korea Institute of Energy Research
Daejeon 34129 (KR)**

(72) Inventors:
• **KIM, Han Ki**
  **Jeju-si Jeju-do 63226 (KR)**
• **JEONG, Nam Jo**
  **Jeju-si Jeju-do 63094 (KR)**
• **HWANG, Kyo Sik**
  **Jeju-si Jeju-do 63326 (KR)**
• **JWA, Eun Jin**
  **Jeju-si Jeju-do 63336 (KR)**
• **NAM, Joo Youn**
  **Jeju-si Jeju-do 63229 (KR)**
• **CHOI, Ji Yeon**
  **Seoul 05670 (KR)**
• **HAN, Ji Hyung**
  **Jeju-si Jeju-do 63303 (KR)**
• **JEUNG, Yoon Cheul**
  **Jeju-si Jeju-do 63357 (KR)**

(74) Representative: **Regimbeau
20, rue de Chazelles
75847 Paris Cedex 17 (FR)**

(54) **BLUE BATTERY FOR LONG-TERM LARGE-CAPACITY ENERGY STORAGE USING SEAWATER, AND SECTOR COUPLING SYSTEM USING SAME**

(57)    The present invention provides a blue battery for energy storage including a first electrode, a second electrode electrically connected to the first electrode, first and second cation exchange membranes disposed sequentially between the first electrode and the second electrode in a direction from the first electrode to the second electrode, an anion exchange membrane disposed between the first cation exchange membrane and the second cation exchange membrane, a bipolar electrode disposed between the first cation exchange membrane and the anion exchange membrane and including a catalyst layer facing any one of the first cation exchange membrane and the anion exchange membrane, and an ion exchange resin layer facing the other of the first cation exchange membrane and the anion exchange membrane, a first flow path provided between the first cation exchange membrane and the bipolar electrode, a second flow path provided between the bipolar electrode and the anion exchange membrane, and a third flow path provided between the anion exchange membrane and the second cation exchange membrane.

FIG. 1

EP 4 708 416 A1

# EP 4 708 416 A1

**Description**

CROSS-REFERENCE TO RELATED APPLICATION

This application claims priority to and the benefit of Korean Patent Application No. PCT/KR2024/005539, filed on April 24, 2024, the disclosure of which is incorporated herein by reference in its entirety.

BACKGROUND

## 1. Field of the Invention

The present invention relates to a blue battery that is a long-duration, large-capacity energy storage system using seawater, and a sector coupling system using the same.

This application is a result of research conducted as a science and technology project support project for the future of a region (Project name: Development of Core Technology for Eco-Friendly Energy Storage Using Seawater for Global Carbon-neutral Leading City, and Project No.: 2022-DD-UP-0308), which is supported by the Ministry of Science and Information and Communication Technology, and Korea Innovation Foundation.

## 2. Discussion of Related Art

An energy storage system (ESS) is a system capable of storing electric energy and generating electricity when needed to resolve an imbalance in power supply and demand. Depending on the purpose, energy storage systems are roughly divided into a short-duration ESS and a long-duration ESS, and since the short-duration ESS is usually required to supply short-duration power within a few seconds to a few hours, high-power batteries with rapid response (for example, lithium-ion batteries or flywheels) are used. On the other hand, the long-duration ESS is installed to store surplus renewable energy power and generate electricity during peak demand hours to secure flexibility in demand and supply. Large-capacity low-cost batteries (for example, NaS battery or RFB) capable of stable power supply for at least 2 to 6 hours, for example, are used.

The core of large-capacity ESS technology lies in 3E (Economic, Environmental, Efficient), and from an economic perspective, new large-capacity ESS technologies should have similar or higher economic feasibility than existing pumped hydro storage. Since the economic feasibility of the large-capacity ESS is most affected by the price of a working fluid that stores energy, large-capacity ESS technologies using, for example, air or water whose working fluid cost is close to 0 should be developed.

The biggest advantage of the ESS using seawater is that a raw material cost required for energy storage is zero, and problems such as fire can be fundamentally prevented. From the perspective of renewable energy supply, the supply of land-based renewable energy is expected to be gradually limited due to issues such as installation site area restrictions and resident acceptance. Therefore, a future market for renewable energy such as floating solar power or offshore wind power is rapidly expanding to water surfaces.

SUMMARY OF THE INVENTION

The present invention is directed to providing a large-capacity long-duration energy storage system (ESS) using seawater capable of storing highly variable renewable energy such as solar power and wind power, which is a blue battery that is a large-capacity energy storage system using seawater capable of storing ionic substances in the seawater as energy by separating the ionic substances into a positive electrolyte (NaOH) and a negative electrolyte (HCl), and a sector coupling system using the same.

Further, the present invention is directed to providing a blue battery that is a large-capacity energy storage system using seawater which produces electricity by using energy generated by an acid-base neutralization reaction due to a pH difference between a positive electrolyte and a negative electrolyte acid and base and energy generated by mixing cations (sodium ions; Na+) with anions (chloride ions; Cl-) due to a concentration difference, and a sector coupling system using the same, when necessary.

According to an aspect of the present invention, there is provided a blue battery for energy storage including a first electrode and a second electrode electrically connected to the first electrode, first and second cation exchange membranes disposed sequentially between the first electrode and the second electrode in a direction from the first electrode to the second electrode, an anion exchange membrane disposed between the first cation exchange membrane and the second cation exchange membrane, a bipolar electrode disposed between the first cation exchange membrane and the anion exchange membrane, the bipolar electrode including a catalyst layer facing any one of the first cation exchange membrane and the anion exchange membrane, and an ion exchange resin layer facing the other of the first cation exchange membrane and the anion exchange membrane, a first flow path provided between the first cation exchange membrane and the bipolar electrode, a second flow path provided between the bipolar electrode and the anion exchange membrane, and a third flow path provided between the anion exchange membrane and the second cation exchange membrane.

Further, the blue battery for energy storage may further include a fourth flow path provided between the first electrode and the first cation exchange membrane, and a fifth flow path provided between the second electrode and the second cation exchange membrane, a first supply unit fluidically connected to the first flow path and provided to supply a first solution containing water to the first flow path, a second supply unit fluidically connected to the second flow path and provided to supply a second solution containing water to the second flow path, a third supply unit fluidically connected to the third flow path and provided to supply a third solution having a different salt concentration from the first and second solutions and containing an ionic substance to the third flow path, an electrode solution supply unit provided to supply an electrode solution to the fourth or fifth flow path, first, second, and third storage units fluidically connected to the first, second, and third flow paths and provided to store first, second, and third storage solutions produced during passage through the first, second, and third flow paths, and a power supply unit provided to supply direct current power to the first and second electrodes, wherein the fourth flow path and the fifth flow path may be fluidically connected to circulate the electrode solution.

Further, in a charging mode, the power may be supplied to the first and second electrodes, the first, second, and third supply units and the electrode solution supply unit may supply the first, second, and third solutions and the electrode solution to the respective paths, and the produced first, second, and third storage solutions may be transferred to and stored in the first, second, and third storage units.

Further, in the charging mode, a polarity opposite to that of the first electrode may be induced on a side of the bipolar electrode facing the first electrode, and a polarity opposite to that of the second electrode may be induced on a side of the bipolar electrode facing the second electrode.

Further, the catalyst layer of the bipolar electrode may include a plurality of catalyst particles supported on a porous support, and in the charging mode, water molecules may be dissociated into hydrogen ions and hydroxide ions due to a polarization phenomenon occurring on a surface of each catalyst particle.

Further, in the charging mode, on the surface of each catalyst particle, a region facing the first electrode and a region facing the second electrode may have different polarities to induce a polarization phenomenon.

Further, the catalyst layer of the bipolar electrode may be disposed to face the first cation exchange membrane, and the ion exchange resin layer may be disposed to face the anion exchange membrane, and the ion exchange resin layer may be provided as a cation exchange resin layer having cation selectivity.

Further, the catalyst layer of the bipolar electrode may be disposed to face the anion exchange membrane, the ion exchange resin layer may be disposed to face the first cation exchange membrane, and the ion exchange resin layer may be provided as an anion exchange resin layer having anion selectivity.

Further, in the charging mode, in the first flow path, the first storage solution may be produced by hydroxide ions dissociated from the water contained in the first solution through the bipolar electrode and cations moved by passing through the first cation exchange membrane, and transferred to the first storage unit, and in the second flow path, the second storage solution may be produced by hydrogen ions dissociated from the water contained in the second solution through the bipolar electrode and anions moved by passing through the anion exchange membrane, and transferred to the second storage unit, and in the third flow path, the third storage solution whose salt concentration decreases as the ionic substance contained in the third solution passes through the anion exchange membrane and the second cation exchange membrane and moves to adjacent flow paths may be produced and transferred to the third storage unit.

Further, in a discharge mode, power supply to the first and second electrodes may be stopped, the first, second, and third storage units and the electrode solution supply unit may supply the first, second, and third storage solutions and the electrode solution to the respective flow paths, and the first, second, and third solutions regenerated during passage of the first, second, and third storage solutions through the respective flow paths may be transferred to the first, second, and third supply units.

Further, in a discharge mode, in the first flow path, hydroxide ions contained in the first storage solution may produce water through the bipolar electrode, cations may pass through the first cation exchange membrane and move into the adjacent flow paths, and the first solution may be regenerated during passage through the first flow path and resupplied to the first supply unit, and in the second flow path, hydrogen ions contained in the second storage solution may produce water through the bipolar electrode, anions may pass through the anion exchange membrane and move into the adjacent flow paths, and the second solution may be regenerated during passage through the second flow path and resupplied to the second supply unit, and in the third flow path, the cations and anions moved from adjacent flow paths may be supplied, and the third solution whose salt concentration becomes higher than the third storage solution during passage through the third flow path may be regenerated and resupplied to the third supply unit.

Further, in a charging mode, cations passing through the second cation exchange membrane from the third flow path may move to the fifth flow path, and in a discharging mode, cations passing through the first cation exchange membrane from the first flow path may move to the fourth flow path, and cations joining the electrode solution may circulate through the fourth and fifth flow paths.

Further, in the charging mode, a positive voltage may be applied to the first electrode and a negative voltage may be applied to the second electrode. Further, the third solution may be concentrated water discharged in a desalination or purification process of seawater desalination, water treatment, and pharmaceutical processes.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1 is a schematic diagram illustrating a blue battery according to an embodiment of the present invention;
FIGS. 2 and 3 are diagrams illustrating a blue battery according to a first embodiment of the present invention;
FIG. 4 is a diagram illustrating a bipolar electrode disposed in the blue battery according to the embodiment of the present invention;
FIG. 5 and FIG. 6 are diagrams illustrating a reaction occurring in a bipolar electrode disposed in a blue battery according to a first embodiment of the present invention;
FIGS. 7 and 8 are diagrams illustrating a blue battery according to a second embodiment of the present invention;
FIGS. 9 and 10 are diagrams illustrating a bipolar electrode disposed in the blue battery according to the second embodiment of the present invention;
FIGS. 11 and 12 are diagrams illustrating a blue battery according to a third embodiment of the present invention;
FIGS. 13 and 14 are diagrams illustrating a blue battery according to a fourth embodiment of the present invention;
FIGS. 15 and 16 are diagrams illustrating driving of respective pumps in a charging mode and a discharging mode of the blue battery according to any of the first, second, third, and fourth embodiments of the present invention;
FIGS. 17 to 19 are diagrams illustrating a structure of a stack unit of the blue batteries according to the first, second, third, and fourth embodiments of the present invention; and
FIG. 20 is a diagram illustrating a seawater desalination-integrated blue battery system in which the blue battery according to any of the first, second, third, and fourth embodiments of the present invention is integrated with a seawater desalination system.

DETAILED DESCRIPTION OF EXEMPLARY EMBODIMENTS

Hereinafter, preferred embodiments of the present invention will be described in detail with reference to the accompanying drawings. Terms or words used in the present specification and claims should not be construed as being limited to their usual or dictionary meanings, and should be construed as having meanings and concepts that conform to the technical idea of the present invention based on the principle that the inventor can appropriately define the concept of the terms in order to explain his or her own invention in the best way.

Further, the same or corresponding components will be denoted by the same or similar reference signs throughout the figures and redundant descriptions thereof will be omitted, and sizes and shapes of respective illustrated components may be exaggerated or reduced for convenience of description.

Thus, since embodiments described herein and configurations illustrated in the drawings are only the most preferred embodiments of the present invention and do not represent all of the technical ideas of the present invention, it should be understood that there may be various equivalents and modified examples that can replace the embodiments at the time of this application.

The present invention relates to a large-capacity, long-duration ESS using seawater, specifically, to a large-capacity, long-duration energy storage system (ESS) capable of storing highly variable renewable energy such as solar power and wind power, and more particularly, to a blue battery that stores energy by separating seawater into acids and bases and produces electricity through acid-base neutralization based on a pH difference between acids and bases, and a concentration difference, when necessary.

Specifically, with the blue battery according to an embodiment of the present invention, salt (for example, NaCl) contained in seawater is dissociated into ions by using an electrochemical method, and energy can be stored in the form of solutions of an anion electrolyte (for example, an acid such as HCl) and a cation electrolyte (for example, a base such as NaOH).

Further, electric energy can be produced through the acid-base neutralization reaction based on the pH difference between the acids and the bases and energy obtained by mixing sodium ions (Na+) with chloride ions (Cl-), in addition to the stored anion electrolyte and cation electrolyte.

First, the term "blue battery" herein refers to a large-capacity energy storage system (ESS), and in particular, the blue battery may be a large-capacity energy storage system (ESS) using seawater. Further, "connected through a line" herein may mean that a fluid is connected so that the fluid can move using a pipe or the like.

Further, the term "regeneration" herein means changing an initial solution state to a storage solution state in a charging mode, and then restoring (regenerating) the storage solution to the initial solution state in a discharging mode.

In other words, a regenerated first solution is a solution obtained by changing a first solution to a first storage solution in a charging mode, and then restoring (regenerating) the first storage solution to the first solution in a discharging mode. Further, a regenerated second solution is a solution obtained by changing a second solution to a second storage solution in a charging mode, and then restoring (regenerating) the second storage solution to the second solution in a discharging mode. Further, a regenerated third solution is a solution obtained by changing a third solution to a third storage solution in a charging mode, and then restoring (regenerating) a third storage solution to the third solution in a discharging mode.

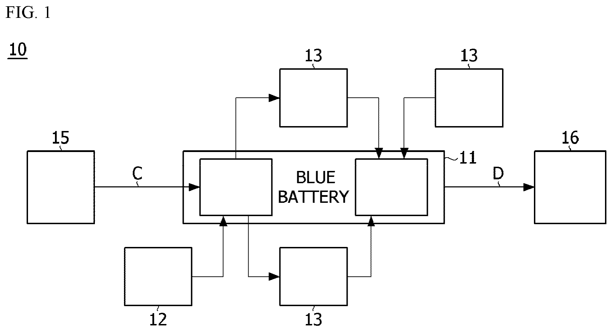

Referring to FIG. 1, a blue battery 10 (100a, 100b, 100c, and 100d) according to an embodiment of the present invention includes a stack unit 11, a solution supply unit 12, and a solution storage unit 13.

The stack unit 11 includes first and second electrodes 110 and 120, a cation exchange membrane 210, an anion exchange membrane 230, and a bipolar electrode 220.

The stack unit 11 dissociates a solution (first, second, and third solutions) supplied from the solution supply unit 12 (121, 122, and 123) into a cation electrolyte (hereinafter referred to as "positive electrolyte") and a anion electrolyte (hereinafter referred to as "negative electrolyte") and stores the positive electrolyte and the negative electrolyte as energy in the solution storage unit 13 (131, 132, and 133).

Further, the stack unit 11 generates energy by supplying the positive electrolyte and negative electrolyte stored in the solution storage unit 13 to the stack unit 11 when necessary, thereby producing power in the stack unit 11.

The blue battery 10 may include an external power supply 15 electrically connected to the first and second electrodes 110 and 120 of the stack unit 11 to supply power (apply a voltage) to the first and second electrodes.

The solution supply unit 12 and the solution storage unit 13 include first, second, and third supply units 12 (121, 122, and 123) that accommodate supply solutions (first, second, and third solutions) required for energy storage, and first, second, and third storage units 13 (131, 132, and 133) for storing first, second, and third storage solutions (for example, a positive electrolyte, a negative electrolyte, and fresh water) discharged from the stack unit 11 to which the supply solutions are supplied.

The external power supply 15 includes renewable energy, new renewable energy, grid power, and surplus energy in such energy or power. For example, the external power supply 15 may include, but is not limited to, a solar thermal generation system, a photovoltaic generation system, a wind power generation system, a geothermal power generation system, and a micro-hydro power generation system with high variability, and surplus energy in such a system.

More specifically, the blue battery 10 according to the embodiment of the present invention may be electrically connected to renewable energy or a grid power 15 to store (charge; C) energy by using the renewable energy or surplus energy from the grid power 15. Seawater and fresh water may be supplied to the stack unit 11 electrically connected to the renewable energy or the grid power 15, the supplied seawater and fresh water may be discharged in the form of a negative electrolyte (acid; HCl) and a positive electrolyte (base, NaOH) so that energy is stored, and the energy may be produced by using a pH difference and a concentration difference between the negative electrolyte and the positive electrolyte and supplied (discharged; D) to a grid power 16 or the like, when necessary.

Further, a spacer which is generally disposed between respective ion exchange membranes to maintain an internal flow path gap and the like are omitted for convenience of description herein.

**First Embodiment**

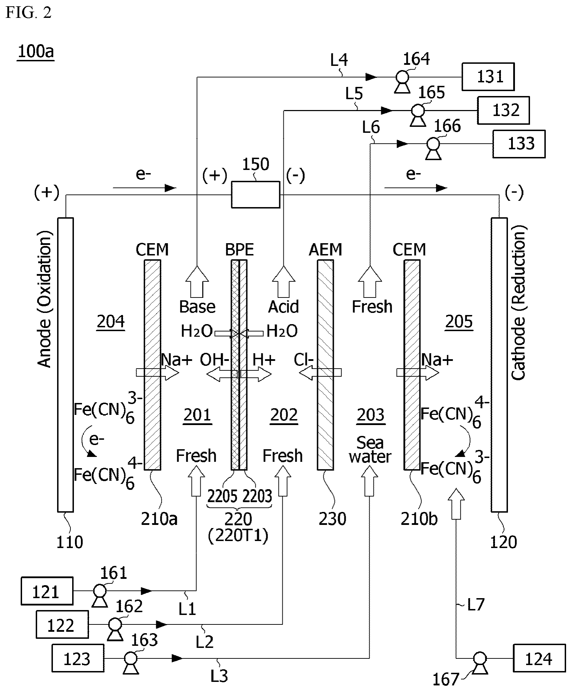

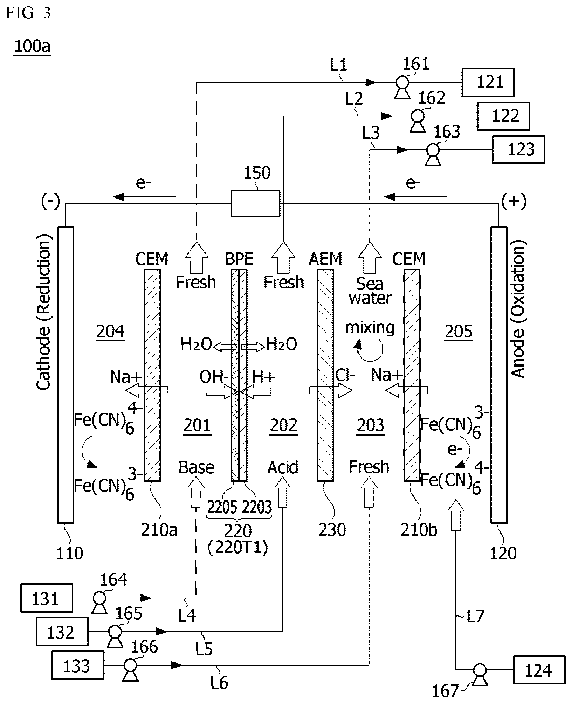

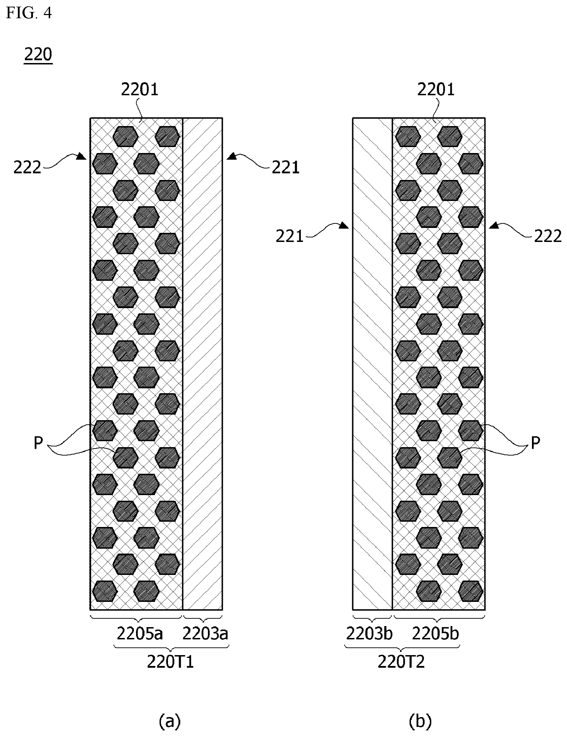

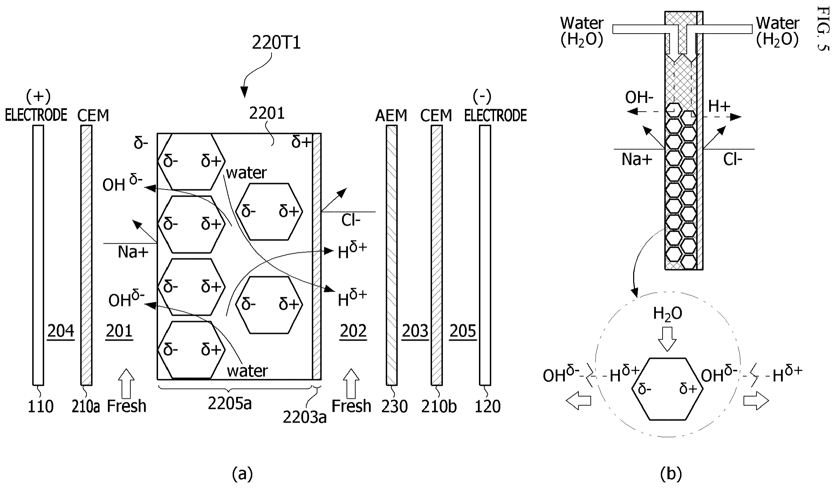

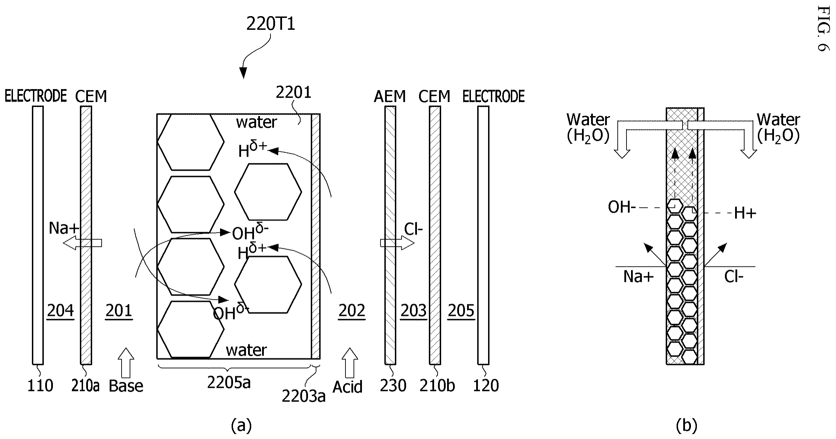

FIGS. 2 and 3 illustrate a blue battery 100a according to a first embodiment of the present invention. FIG. 2 illustrates an operating state in a blue battery charging mode according to the first embodiment, and FIG. 3 illustrates an operating state in a discharging mode (power generation mode) in FIG. 2. FIG. 4 illustrates a bipolar electrode of the present invention. FIGS. 5 and 6 illustrate reactions in the bipolar electrode disposed in the blue battery.

The blue battery 100a according to the first embodiment of the present invention will be described in detail with reference to FIGS. 2 to 6.

The blue battery 100a according to the first embodiment of the present invention includes a first electrode 110, and a second electrode 120 disposed to face the first electrode 110 at a predetermined distance and electrically connected to the first electrode 110.

The blue battery 100a includes a first cation exchange membrane 210a and a second cation exchange membrane 210b sequentially disposed in a direction from the first electrode 110 to the second electrode 120 between the first electrode 110 and the second electrode 120.

The blue battery 100a includes an anion exchange membrane 230 disposed between the first cation exchange membrane 210a and the second cation exchange membrane 210b.

The blue battery 100a includes a bipolar electrode 220 (220T1 and 220T2) disposed between the first cation exchange membrane 210a and the anion exchange membrane 230.

The blue battery 100a includes a first flow path 201 provided between the first cation exchange membrane 210a and the bipolar electrode 220, a second flow path 202 provided between the bipolar electrode 220 and the anion exchange membrane 230, and a third flow path 203 provided between the anion exchange membrane 230 and the second cation exchange membrane 210b.

The blue battery 100a includes a fourth flow path 204 provided between the first electrode 110 and the first cation exchange membrane 210a, and a fifth flow path 205 provided between the second electrode 120 and the second cation exchange membrane 210b.

The first electrode 110, the first cation exchange membrane 210a, the bipolar electrode 220, the anion exchange membrane 230, the second cation exchange membrane 210b, and the second electrode 120 may define the first, second, third, fourth, and fifth flow paths 201, 202, 203, 204, and 205, respectively.

The blue battery 100a includes a first supply unit 121 fluidically connected to the first flow path 201 via a first line L1 and provided to supply the first solution containing water to the first flow path 201. A first pump 161 for supplying the first solution accommodated in the first supply unit 121 to the first flow path 201 may be provided on the first line L1.

The blue battery 100a includes a second supply unit 122 fluidically connected to the second flow path 202 via a second line L2 and provided to supply the second solution containing water to the second flow path 202. A second pump 162 for supplying the second solution accommodated in the second supply unit 122 to the second flow path 202 may be provided on the second line L2.

The blue battery 100a includes a third supply unit 123 fluidically connected to the third flow path 203 via a third line L3 and provided to supply a third solution to the third flow path 203. The third solution contains an ionic substance, and has a different salt concentration from the first and second solutions. Further, the third solution may be a solution having a relatively higher salt concentration than the first and second solutions.

A third pump 163 for supplying the third solution accommodated in the third supply unit 123 to the third flow path 203 may be provided on the third line L3.

The blue battery 100a includes an electrode solution supply unit 124 provided to supply an electrode solution to the fourth flow path 204 or the fifth flow path 205. The fourth flow path 204 and the fifth flow path 205 may be fluidically connected to each other so that the electrode solution can circulate.

The blue battery 100a includes first, second, and third storage units 164, 165, and 166 for storing the first, second, and third storage solutions produced as the first, second, and third solutions pass through the respective flow paths.

The first flow path 201 is fluidically connected to the first storage unit 131 via a fourth line L4, the second flow path 202 is fluidically connected to the second storage unit 132 via a fifth line L5, and the third flow path 203 is fluidically connected to the third storage unit 133 via a sixth line L6.

A fourth pump 164 for supplying the first storage solution accommodated in the first storage unit 131 to the first flow path 201 may be provided on the fourth line L4. A fifth pump 165 for supplying the second storage solution accommodated in the second storage unit 132 to the second flow path 202 may be provided on the fifth line L5. A sixth pump 166 for supplying the third storage solution accommodated in the third storage unit 133 to the third flow path 203 may be provided on the sixth line L6. The first to sixth pumps 161 to 166 may adjust flow rates of the solutions (the first, second, and third solutions and the first, second, and third storage solutions) supplied to the respective flow paths.

At least one of the fourth flow path 204 and the fifth flow path 205 is fluidically connected to the electrode solution supply unit 124 accommodating the electrode solution via the seventh line L7, and a pump 167 for supplying and circulating the electrode solution may be provided on the seventh line L7.

The blue battery 100a includes a power supply unit 150 provided to supply direct current power to the first and second electrodes 110 and 120. A voltage may be applied to each of the first and second electrodes 110 and 120 through the power supply unit 150.

The power supply unit 150 may include a power conversion device (for example, a converter) that converts AC power (AC voltage) into DC power (DC voltage) when the voltage applied from the external power supply 15 is AC power (AC voltage). The power conversion device may be electrically connected between the external power supply 15 and the power supply unit 150 to adjust a voltage, convert the AC power (AC voltage) applied from the external power supply 15 into the DC power (DC voltage), and supply the DC power to the power supply unit 150. The blue battery 100a may include a power conversion device (for example, a converter) for supplying the power produced in the discharging mode to the grid power or the like. In this case, the power conversion device may be electrically connected between the blue battery 100a and the grid power to adjust a voltage produced by the blue battery 100, for example, to convert a direct current (DC) voltage into an alternating current (AC) voltage, and supply the AC voltage to the grid power.

The first and second solutions supplied to the first and second flow paths 201 and 202 may be at least one selected from among brackish water, fresh water, pure water, and a mixed solution containing at least one of these. Further, the third solution supplied to the third flow path includes at least one selected from among a solution containing an ionic substance, seawater, salt water, wastewater, ionized water, ammonia, nitric acid, and a mixed solution containing at least one of these, and may include concentrated water produced through an apparatus that discharges concentrated water such as a seawater desalination system (RO).

The first storage solution produced during passage through the first flow path 201 may be a positive electrolyte, such as an alkaline solution. The second storage solution produced during passage through the second flow path 202 may be a negative electrolyte, such as an acidic solution. The third storage solution produced during passage through the third flow path 203 may be a solution having a lower salt concentration than the third solution, such as fresh water.

Referring to FIG. 4, the bipolar electrode 220 (220T1 and 220T2) includes an ion exchange resin layer 2203 (2203a or 2203b) and a catalyst layer 2205 (2205a or 2205b).

The catalyst layer 2205 may be an inorganic catalyst layer, and the ion exchange resin layer 2203 may be an organic catalyst layer. Therefore, the bipolar electrode 220 may include an inorganic catalyst layer and an organic catalyst layer.

The bipolar electrode 220 includes a first side 221, and a second side 222 opposite to the first side, the ion exchange resin layer 2203 may be provided on the first side 221, and the catalyst layer 2205 may be provided on the second side 222.

Specifically, the bipolar electrode 220 includes a porous support 2201 having pores formed therein, and the ion exchange resin layer 2203 and the catalyst layer 2205 may be provided on the porous support 2201.

The catalyst layer 2205 includes a plurality of catalyst particles P supported on the porous support 2201. The catalyst layer 2205 may be formed of the plurality of catalyst particles P, which are supported in the pores on the second side 222 of the bipolar electrode 220.

The catalyst layer 2205 may include a residual region other than a region in which the ion exchange resin layer 2203 is provided on the porous support 2201. The catalyst layer 2205 may include an entire region in which the catalyst particles P are supported, other than the ion exchange resin layer 2203 provided on the porous support 2201.

The porous support 2201 includes a plurality of microflow paths (not shown) into which water flows or through which internally produced water flows. The catalyst particles P may be supported in the microflow paths (not shown). The plurality of microflow paths may serve as flow paths (passages) in which water is introduced and dissociated into hydroxide ions and hydrogen ions, or in which hydroxide ions and hydrogen ions are introduced and water is produced and flows through.

The porous support 2201 may include pores provided in the entire region so that catalyst particles can be supported in the entire region, or may include pores provided only in a partial region so that the catalyst particles can be supported only in the partial region.

The porous support 2201 may be a conductive support or a non-conductive support. The porous support may be a conductive support. That is, the porous support may be a porous conductive support having pores formed inside.

As described above, since conductive catalyst particles which are conductive particles are supported on the porous conductive support in the bipolar electrode of the present invention, it is possible to maximize an effective area for producing (separating) hydrogen ions and hydroxide ions because water is dissociated into hydrogen ions and hydroxide ions based on a polarization phenomenon of the porous conductive support and the conductive catalyst particles, and thus to produce acids and bases in a charging process without increasing electrical resistance.

When the porous support 2201 is the non-conductive support, the ion exchange resin layer 2203 is provided on the first side of the bipolar electrode and a dense catalyst layer is provided on the second side of the bipolar electrode, thereby selectively passing and blocking cations or anions.

For example, the anions pass through the catalyst layer and flow into the porous support, whereas the cations do not pass through the catalyst layer and remain in an adjacent flow path.

Further, when the porous support 2201 is the non-conductive support, a non-conductive section of a residual region other than at least a portion of the region in which the catalyst particles are supported may be provided in a structure that completely blocks substance movement.

Here, the cations and the anions may be selectively passed and blocked in the at least portion of the region in which the catalyst particles are supported.

In addition, the catalyst of the catalyst layer 2205 includes a metal catalyst and a metal compound. Further, the catalyst includes a single metal catalyst and a metal compound catalyst having conductivity capable of electrically inducing a voltage in an electric field or having free electrons on a surface of the catalyst. The ion exchange resin layer 2203 includes a cation exchange resin layer 2203a, which selectively passes only the cations and blocks the anions so that the anions do not pass through the cation exchange resin layer 2203a. The cation exchange resin layer 2203a may be referred to as a cation-selective organic catalyst layer.

The ion exchange resin layer 2203 includes an anion exchange resin layer 2203b, which selectively passes only the anions, and blocks the cations so that the cations do not pass through the anion exchange resin layer 2203b. The anion exchange resin layer 2203b may be referred to as an anion-selective organic catalyst layer.

The catalyst layer 2205 includes an anion-selective catalyst layer 2205a, and the anion-selective catalyst layer 2205a is formed so that catalyst molecules have a layered double hydroxide (LDH) structure, to selectively pass the anions and selectively block the cations. The catalyst layer 2205a may be referred to as an anion-selective inorganic catalyst layer. In the anion-selective catalyst layer 2205a, anion-selective catalyst particles may be supported as catalyst particles on the porous support 2201.

For example, a molecular structure of the anion-selective catalyst particle is formed as a layered double hydroxide (LDH) structure. Each of the layered structures can selectively block cations that come into contact from the outside due to a molecular structure in which there are surplus cations, and the cations in the hydroxide may include Fe, Ca, Mg, Al, and the like.

The layered double hydroxide (LDH) structure exists in a state in which there are surplus cations due to a different balance of charge in a molecular structure, and can electrically selectively block the cations in the solution that come into contact in an adjacent flow path due to the surplus cations in the molecular structure.

The catalyst layer 2205 includes a cation-selective catalyst layer 2205b, and the cation-selective catalyst layer 2205b is formed so that the catalyst molecules have a mesoframe structure, to thereby selectively pass the cations and selectively block the anions. The catalyst layer 2205b may be referred to as a cation-selective inorganic catalyst layer. In the cation-selective catalyst layer 2205b, cation-selective catalyst particles may be supported as catalyst particles on the porous support 2201.

For example, the molecular structure of the cation-selective catalyst particle is formed as a lattice-type mesoframe structure so that anionic molecules (for example, $Fe(CN)_6^{3-}$) are disposed at intersections of respective lattices, making it possible to electrically selectively block the anions and selectively move cations such as Na+ and K+ through an internal molecular structure formed by the electrostatic properties of the anionic molecules.

The mesoframe structure may be, for example, a Prussian Blue Analogue (PBA), but is not limited thereto. The lattice-type mesoframe structure exists in a state in which there are surplus anions due to a different balance of charge in a molecular structure, and electrically selective blocks anions in the solution that come into contact in an adjacent flow path due to the surplus anions in the molecular structure.

In the charging mode of the blue battery 100a, when respective voltages are applied to the first and second electrodes 110 and 120, different polarities are induced on the first side 221 and the second side 222 of the bipolar electrode 220.

In the bipolar electrode 220, a polarity opposite to that of the first electrode 110 is induced on a face facing the first electrode 110, and a polarity opposite to that of the second electrode is induced on a face facing the second electrode 120. Accordingly, charge layers with different polarities are formed on one bipolar electrode.

Specifically, in the charging mode of the blue battery, a negative charge ($\delta$-) region and a positive charge ($\delta$+) region are formed on a surface of each catalyst particle P in the bipolar electrode 220, thereby inducing the polarization phenomenon.

A polarity opposite to that of the first electrode is induced in a portion of a region of the catalyst particle P facing the first electrode 110, and a polarity opposite to that of the second electrode is induced in a portion of a region of the catalyst particle P facing the second electrode 120. Thus, in the catalyst particle P, the region facing the first electrode 110 and the region facing the second electrode 120 have different polarities, thereby inducing the polarization phenomenon.

Since the negative charge ($\delta$-) region formed on the surface of each of the catalyst particles attracts hydrogen ions (H+) of water molecules (H2O) using attraction and repels hydroxide ions (OH-) using repulsion, the hydroxide ions (OH-) are detached from (fall off) the surface of the catalyst particle P. At the same time, since the positive charge ($\delta$+) region formed on the surface of each of the catalyst particles attracts the hydroxide ions (OH-) using attraction and repels the hydrogen ions (H+) using repulsion, the hydrogen ions (H+) are detached from (fall off) the surface of the catalyst particle P. Thus, the water molecules can be dissociated into the hydroxide ions and the hydrogen ions on the surface of each catalyst particle.

Since polarities (a positive voltage and a negative voltage) of the voltage applied to the first electrode 110 and the second electrode 120 and a disposition of the bipolar electrode determine a path through which the hydrogen ions (H+) and the hydroxide ions (OH-) dissociated in the bipolar electrode 220 move, the polarities of the voltage applied to the first and second electrodes 110 and 120 and the arrangement of the first side and the second side of the bipolar electrode are important.

In the first embodiment, referring to FIG. 4A, a bipolar electrode 220T1 (also referred to as a "bipolar electrode having a first configuration" or a "bipolar electrode of a first type") may include the cation exchange resin layer 2203a and the anion-selective catalyst layer 2205a.

In this case, the bipolar electrode 220T1 may be disposed so that the catalyst layer 2205a faces the first cation exchange membrane 210a and the cation exchange resin layer 2203a faces the anion exchange membrane 230. The catalyst layer 2205a may be disposed to face the first electrode 110 and the cation exchange resin layer 2203a may be disposed to face the second electrode 120.

Further, the bipolar electrode 220 disposed in the blue battery according to the present invention is not electrically connected to the first and second electrodes. Therefore, external power is not supplied to the bipolar electrode 220.

An operation in the charging mode of the blue battery 100a according to the first embodiment of the present invention will be described with reference to FIG. 2.

The first and second solutions may be fresh water, and the third solution may be seawater. Further, the electrode solution may be a potassium ferricyanide solution ($K_4[Fe(CN)_6]$), and ferricyanide ($Fe(CN)_6^{3-/4-}$) may be used as a redox species to cause oxidation and reduction reactions at the electrode. Using the power supply unit 150, a positive (+) voltage is applied to the first electrode 110 and a negative (-) voltage is applied to the second electrode 120.

Next, the first, second, and third supply units 121, 122, and 123 supply the first, second, and third solutions to the first, second, and third flow paths 201, 202, and 203, respectively, and the fourth supply unit 124 supplies the electrode solution ($Fe(CN)_6^{3-/4-}$) to the fifth flow path. Here, although the electrode solution is illustrated as being supplied to the fifth flow path, the electrode solution may also be supplied to the fourth flow path.

In this case, the first solution (fresh water) and the second solution (fresh water) are dissociated into hydroxide ions (OH-) and hydrogen ions (H+) at the bipolar electrode, respectively. In this case, a positive (+) voltage is applied to the first electrode 110 so that the hydroxide ions (OH-) with negative charge opposite thereto can move into the first flow path 201 since the hydroxide ions (OH-) try to move toward the first electrode 110.

On the other hand, a negative (-) voltage is applied to the second electrode 120 so that the hydrogen ions (H+) with positive charge opposite thereto can move into the second flow path 202 since the hydrogen ions (H+) try to move toward the second electrode 120.

Further, the sodium ions (Na+) contained in the third solution (seawater) pass through the second cation exchange membrane 210b and move into the fifth flow path 205, and the chloride ions (Cl-) pass through the anion exchange membrane 230 and move into the second flow path 202.

For the ionic substance in the third solution (seawater), as the electric field is generated due to the voltages applied to the first and second electrodes 110 and 120, the chloride ions (Cl-) negatively charged by the electric field pass through the anion exchange membrane 230 and move since the chloride ions (Cl-) try to move toward the first electrode 110, and the positively charged sodium ions (Na+) pass through the second cation exchange membrane 210b and move into the fifth flow path 205 since the sodium ions (Na+) try to move toward the second electrode 120.

The sodium ions (Na+) that have moved into the fifth flow path 205 move into the fourth flow path 204 due to the circulation of the electrode solution, pass through the first cation exchange membrane 210a from the fourth flow path, and move into the first flow path 201.

Thus, the hydroxide ions (OH-) supplied to the first flow path 201 through the bipolar electrode produce an alkaline solution (NaOH) as the first storage solution with the sodium ions Na+ that have moved from the third solution (seawater) and the alkaline solution (NaOH) is stored in the first storage unit 131. In this case, the alkaline solution may have pH 10 to 11. At the same time, the hydrogen ion (H+) supplied to the second flow path 202 through the bipolar electrode produces an acidic solution (HCl) as the second storage solution with the chloride ions (Cl-) moved from the third solution (seawater), and the acidic solution (HCl) is stored in the second storage unit 132. In this case, the acidic solution may have pH 3 to 4.

At the same time, since ionic substances (Na+ and Cl-) of the third solution (seawater) supplied to the third flow path 203 pass through the second cation exchange membrane 210b and the anion exchange membrane 230 and move into the fifth flow path 205 and the second flow path 202, respectively, fresh water is produced as the third storage solution and stored in the third storage unit 133.

The fourth flow path 204 and the fifth flow path 205 through which the electrode solution flows are defined by the cation exchange membranes 210a and 210b, and since the ferricyanide ($Fe(CN)_6^{3-/4-}$) used as a redox species of the electrode solution cannot pass through the cation exchange membrane, it is possible to prevent the ferricyanide from flowing into flow paths adjacent to the fourth and fifth flow paths 204 and 205. For example, when an anion exchange membrane is used, there is a problem that the ferricyanide passes through the anion exchange membrane and flows into adjacent flow paths since the ferricyanide is an anion.

A reaction occurring at the bipolar electrode in the charging mode of the blue battery according to the first embodiment will be described with reference to FIG. 5.

When a positive voltage is applied to the first electrode 110 and a negative voltage is applied to the second electrode 120, a negative charge ($\delta$-) region opposite to the positive voltage is formed on the surface of each catalyst particle P of the bipolar electrode facing the first electrode 110, and a positive charge ($\delta$+) region opposite to the negative voltage is formed on the surface of each catalyst particle P of the bipolar electrode facing the second electrode 120, thereby inducing a polarization phenomenon.

In this state, since water (H2O) contained in the first and second solutions (fresh water) supplied to the first and second flow paths 201 and 202 is a polar molecule, the respective catalyst particles electrically attract the water. Accordingly, water molecules are dissociated into hydroxide ions (OH-) and hydrogen ions (H+) by the negative charge region and the positive charge region formed on the surfaces of the respective catalyst particles.

The hydroxide ions dissociated as described above do not pass through the cation exchange resin layer of the bipolar electrode, but instead pass through the catalyst layer 2205a and move into the first flow path 201. In this case, since the sodium ions (Na+) that have moved from the fourth flow path 204 to the first flow path 201 have an electrostatic repulsion with respect to the cations due to the catalyst layer 2205a formed in a catalyst molecular structure that blocks the cations, the sodium ions do not pass through the catalyst layer 2205a and remain in the first flow path 201.

At the same time, the hydrogen ions dissociated as described above do not pass through the catalyst layer 2205a of the bipolar electrode, but instead pass through the cation exchange resin layer 2203a and move into the second flow path 202. In this case, the chloride ions (Cl-) that pass through the anion exchange membrane 230 in the third flow path 203 and move into the second flow path 202 do not move into the porous support 2201 due to the cation exchange resin layer 2203a of the bipolar electrode and remain in the second flow path 202.

Through the process as described above, in the first flow path 201, a basic solution (NaOH) is produced as the first storage solution, and the produced basic solution (NaOH) is transferred to the first storage unit 131.

In the second flow path 202, an acid solution (HCl) is produced as the second storage solution, and the produced acid solution (HCl) is transferred to the second storage unit 132. In the third flow path 203, fresh water is produced as the third storage solution, and the produced fresh water is transferred to the third storage unit 133.

An operation in the discharging mode (power generation mode) of the blue battery 100a according to the first embodiment of the present invention will be described with reference to FIG. 3.

The power supply from the power supply unit 150 to the first and second electrodes 110 and 120 is stopped. The application of the voltage to the first and second electrodes 110 and 120 is stopped.

Then, the first, second, and third storage solutions are supplied from the first, second, and third storage units 131, 132, and 133 to the first, second, and third flow paths 201, 202, and 203, respectively, and the electrode solution $(\mathrm{Fe(CN)_6^{3-/4-}})$ is supplied from the fourth supply unit 124 to the fifth flow path 205. Here, the electrode solution may also be supplied from the fourth supply unit 124 to the fourth flow path 204.

In this case, the hydroxide ions in the basic solution supplied to the first flow path 201 and the hydrogen ions in the acidic solution supplied to the second flow path 202 flow into the porous support of the bipolar electrode, and the hydroxide ions (OH-) and the hydrogen ions (H+) are synthesized into water to generate electricity. That is, the hydroxide ions (OH-) and the hydrogen ions (H+) contained in the basic solution and the acidic solution in which energy is chemically stored move into the bipolar electrode to cause an acid-base reaction. In this case, a voltage is generated due to a pH concentration difference on both surfaces (surfaces of the first side and the second side) of the bipolar electrode, and a magnitude of the voltage can be determined by a Nernst Equation, as in Formula 1 below.

[Formula 1]

$$\frac{RT}{zF} \ln\left( \frac{[\mathrm{H_{an}}^+]}{[\mathrm{H_{cat}}^+]} \right)$$

Since the surface (of the second side) of the bipolar electrode that defines the first flow path 201 comes into contact with an alkaline solution (about pH 11), and the surface (of the first side) of the bipolar electrode that defines the second flow path 202 comes into contact with an acidic solution (about pH 2), energy (electricity) can be produced by an acid-base neutralization reaction caused by a pH concentration difference. That is, the energy can be produced by the acid-base neutralization reaction caused by the pH difference on the second side of the bipolar electrode in contact with the first storage solution and the first side of the bipolar electrode in contact with the second storage solution.

Further, when the first, second, and third storage solutions are supplied to the first, second, and third flow paths 201 to 203, a difference arises between a concentration of the chloride ions (Cl-) in the acid solution supplied to the second flow path 202 and a concentration of the chloride ions (Cl-) in the fresh water supplied to the third flow path 203, and the chloride ions move from the second flow path 202 with a relatively high concentration to the third flow path 203 with a relatively low concentration.

At the same time, when the sodium ions Na+ in the basic solution supplied to the first flow path 201 move into the fifth flow path 205 through the fourth flow path 204, a difference arises between a concentration of the sodium ions Na+ in the fifth flow path 205 and a concentration of the sodium ions Na+ in the fresh water supplied to the third flow path 203, and the sodium ions move from the fifth flow path 205 with the relatively higher concentration to the third flow path 203 with the relatively lower concentration. As described above, energy is generated during mixing of the sodium ions and the chloride ions that have moved into the third flow path 203 due to the difference in the concentration of the ions.

The electricity is generated through the process described above, and fresh water is regenerated in the first flow path 201 and the second flow path 202 and seawater is regenerated in the third flow path 203 during passage through the first, second, and third flow paths 201, 202, and 203. The regenerated first, second, and third solutions (the fresh water, the fresh water, and the sea water) may be transferred to the first, second, and third supply units 121 to 123.

As described above, in the discharging mode, since the hydroxide ions contained in the basic solution are synthesized into water through the bipolar electrode in the first flow path 201 and the sodium ions (Na+) pass through the first cation exchange membrane 210a and move into the fourth flow path 204, the fresh water can be regenerated and resupplied to the first supply unit 121 as the basic solution passes through the first flow path.

Since, in the second flow path 202, hydrogen ions contained in the acidic solution are synthesized into water through the bipolar electrode and the chloride ions (Cl-) pass through the anion exchange membrane 230 and move into the third flow path 203, the fresh water can be regenerated and resupplied to the second supply unit 122 as the acidic solution passes through the second flow path 202.

In the third flow path 203, the seawater whose salt concentration becomes higher than the fresh water as the fresh water passes through the third flow path 303 can be regenerated and resupplied to the third supply unit 123 by the chloride ions (Cl-) that have moved from the second flow path 202 and the sodium ions (Na+) that have moved from the fifth flow path 205.

During passage through the first, second, and third flow paths 201, 202, and 203, the first solution is changed from the fresh water to an alkaline solution in the charging mode and then regenerated back into the fresh water in the discharging mode. Further, the second solution is changed from the fresh water to an acidic solution in the charging mode and then regenerated back to the fresh water in the discharging mode. Further, the third solution is changed from the seawater to the fresh water in the charging mode and then regenerated back to the seawater in the discharging mode.

Further, in the charging mode of the blue battery 100a according to the first embodiment of the present invention, the cations (sodium ions) that have passed through the second cation exchange membrane 210c from the third flow path 203 move into the fifth flow path 205, and in the discharging mode, the cations (sodium ions) that have passed through the first cation exchange membrane 210a from the first flow path 201 move into the fourth flow path 204, such that the cations (sodium ions) that have been incorporated into the electrode solution can circulate through the fourth and fifth flow paths 204 and 205. Thus, in the charging mode or the discharging mode, the sodium ions that have moved into the fifth flow path 205 or the fourth flow path 204 can be incorporated into the electrode solution and circulate through the fourth and fifth flow paths 204 and 205.

As described above, when the ion exchange membranes immediately adjacent to the first and second electrodes 110 and 120 are disposed as the cation exchange membranes (the first and second cation exchange membranes) to form flow paths (the fourth and fifth flow paths) through which the electrode solution flows, the sodium ions with the highest concentration in the seawater pass through the first and second cation exchange membranes and are incorporated into the electrode solution, such that the output density of the blue battery can be improved in the discharging mode by a combination of a high sodium ion flux (Na+ flux) with the electrode solution (Fe(CN)).

A reaction occurring at the bipolar electrode in the discharging mode (power generation mode) of the blue battery according to the first embodiment will be described with reference to FIG. 6.

In a state in which the power supply to the first and second electrodes 110 and 120 is stopped, hydroxide ions contained in the first storage solution (basic solution) supplied to the first flow path 201 flow into the porous support 2201 of the catalyst layer 2205a, and the sodium ions do not flow into the porous support due to the anion-selective catalyst layer 2205a and instead pass through the first cation exchange membrane 210a from the first flow path 201 to move into the fourth flow path 204.

At the same time, hydrogen ions contained in the second storage solution (acidic solution) supplied to the second flow path 202 pass through the cation exchange resin layer 2203a and flow into the porous support 2201, and the chloride ions do not pass through the cation exchange resin layer, and pass through the anion exchange membrane 230 and move into the third flow path 203.

Therefore, the hydroxide ions flowing into the porous support 2201 on the second side of the bipolar electrode 220 and the hydrogen ions flowing into the porous support 2201 through the ion exchange resin layer on the first side of the bipolar electrode 220 are synthesized into water and generate electricity.

## Second Embodiment

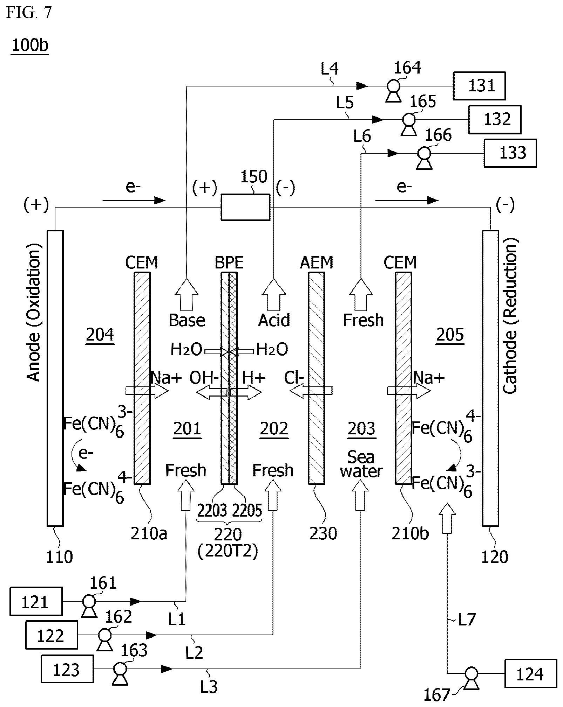

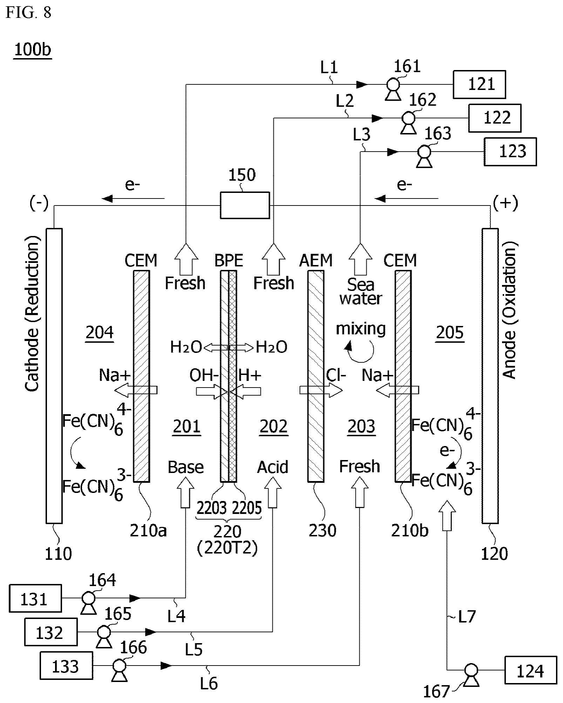

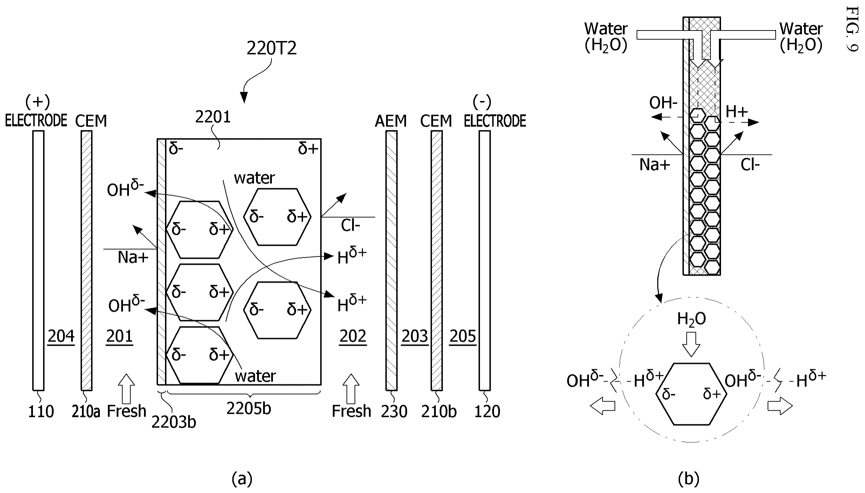

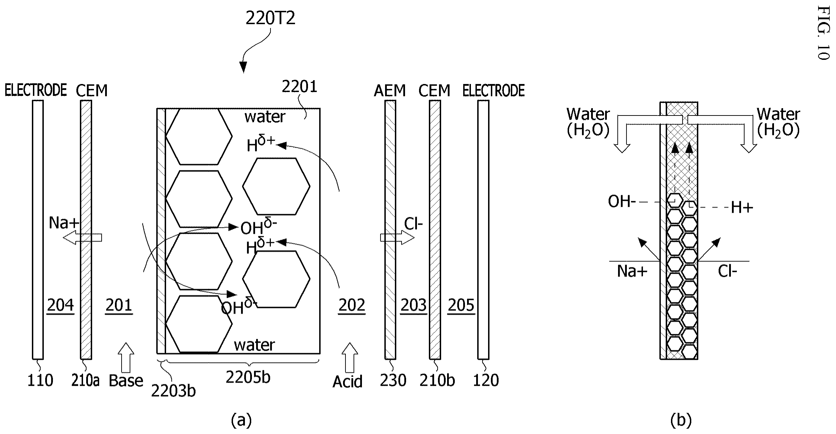

FIGS. 7 and 8 illustrate a blue battery 100b according to a second embodiment of the present invention. FIG. 7 illustrates an operating state of the charging mode of the blue battery according to the second embodiment, and FIG. 8 illustrates the operating state of the discharging mode (power generation mode) of FIG. 7. FIGS. 9 and 10 illustrate reactions at the bipolar electrode disposed in the blue battery.

The blue battery 100b according to the second embodiment of the present invention will be described in detail with reference to FIGS. 4 and 7 to 10. The same components as those of the blue battery 100a according to the first embodiment described above are denoted by the same reference signs, and description thereof will be omitted, but the above-described content can be applied in the same manner.

Referring to FIGS. 7 and 8, the blue battery 100b according to the second embodiment of the present invention includes a first electrode 110, and a second electrode 120 electrically connected to the first electrode 110.

The blue battery 100b includes a first cation exchange membrane 210a, a bipolar electrode 220, an anion exchange membrane 230, and a second cation exchange membrane 210b sequentially disposed in a direction from the first electrode 110 to the second electrode 120 to sequentially define the first, second, and third flow paths 201, 202, and 203 between the first electrode 110 and the second electrode 120.

A fourth flow path 204 is provided between the first cation exchange membrane 210a and the first electrode 110, and a fifth flow path 205 is provided between the second cation exchange membrane 210b and the second electrode 120, so that the electrode solution can flow.

The blue battery 100b includes first, second, and third supply units 121, 122, and 123 for supplying the first, second, and third solutions to the first, second, and third flow paths 201, 202, and 203. The blue battery 100b includes the first, second, and third storage units 131, 132, and 133 for storing the first, second, and third storage solutions. The blue battery 100b includes an electrode solution supply unit 124 for supplying the electrode solution.

In the second embodiment, referring to FIG. 4B, the bipolar electrode 220T2 (also referred to as a "bipolar electrode of a second configuration" or a "bipolar electrode of a second type") may include the anion exchange resin layer 2203b and the cation-selective catalyst layer 2205b.

The anion exchange resin layer 2203b may be provided on the first side 221 of the bipolar electrode 220T2, and the cation-selective catalyst layer 2205b may be provided on the second side 222. In this case, the bipolar electrode 220 may be disposed so that the ion exchange resin layer 2203b faces the first cation exchange membrane 210a and the catalyst layer 2205b faces the anion exchange membrane 230. The anion exchange resin layer 2203b may be disposed to face the first electrode 110 and the catalyst layer 2205b may be disposed to face the second electrode 120.

The bipolar electrode 220T2 disposed in the blue battery 100b according to the second embodiment may have a different configuration and different arrangement from the bipolar electrode 220T1 described above in the first embodiment. Further, the bipolar electrode 220 disposed in the blue battery according to the present invention is not electrically connected to the first and second electrodes. Therefore, external power is not supplied to the bipolar electrode 220.

Referring to FIG. 7, since an operation in the charging mode of the blue battery 100b according to the second embodiment of the present invention is the same as that of the blue battery 100a according to the first embodiment described above, description thereof will be omitted, and a reaction occurring in the bipolar electrode different from that of the blue battery 100a according to the first embodiment will be described.

A reaction occurring in the bipolar electrode in the charging mode of the blue battery according to the second embodiment will be described with reference to FIG. 9.

When a positive voltage is applied to the first electrode 110 and a negative voltage is applied to the second electrode 120, a negative charge ($\delta$-) region opposite to the positive voltage is formed on the surface of each catalyst particle P of the bipolar electrode facing the first electrode 110, and a positive charge ($\delta$+) region opposite to the negative voltage is formed on the surface of each catalyst particle P facing the second electrode 120, thereby inducing a polarization phenomenon. In this state, since water ($H_2O$) contained in the first and second solutions (fresh water) supplied to the first and second flow paths 201 and 202 is a polar molecule, the respective catalyst particles electrically attract the water. Accordingly, water molecules are dissociated into hydroxide ions (OH-) and hydrogen ions (H+) by the negative charge region and the positive charge region formed on the surfaces of the respective catalyst particles.

The hydroxide ions dissociated as described above do not pass through the cation-selective catalyst layer 2205b of the bipolar electrode, but instead pass through the anion exchange resin layer 2203b and move into the first flow path 201. In this case, the sodium ions (Na+) that have moved from the fourth flow path 204 to the first flow path 201 do not move into the porous support 2201 and remain in the first flow path 201 due to the anion exchange resin layer 2203b.

At the same time, the hydrogen ions dissociated as described above do not pass through the anion exchange resin layer 2203b of the bipolar electrode, but instead pass through the cation-selective catalyst layer 2205b and move into the second flow path 202. In this case, since the chloride ions (Cl-) that have moved from the third flow path 203 to the second flow path 202 have an electrostatic repulsion with respect to the anions due to the catalyst layer 2205b formed in a catalyst molecular structure that blocks the anions, the chloride ions do not pass through the catalyst layer 2205b and remain in the second flow path 202.

Through the process as described above, in the first flow path 201, the basic solution (NaOH) is produced as the first storage solution, and the produced basic solution (NaOH) is transferred to the first storage unit 131. In the second flow path 202, an acid solution (HCl) is produced as the second storage solution, and the produced acid solution (HCl) is transferred to the second storage unit 132. In the third flow path 203, fresh water is produced as the third storage solution, and the produced fresh water is transferred to the third storage unit 133.

Referring to FIG. 8, since an operation in a discharging mode (power generation mode) of the blue battery 100b according to the second embodiment of the present invention is the same as that in the blue battery 100a according to the first embodiment described above, description thereof will be omitted, and a reaction occurring at the bipolar electrode different from that in the blue battery 100a according to the first embodiment will be described.

The reaction occurring at the bipolar electrode in the discharging mode of the blue battery according to the second embodiment will be described with reference to FIG. 10.

When the power supply to the first and second electrodes 110 and 120 is stopped, the hydroxide ions contained in the first storage solution (basic solution) supplied to the first flow path 201 pass through the anion exchange resin layer 2203b and flow into the porous support 2201, and the sodium ions do not pass through the anion exchange resin layer 2203b, and instead pass through the first cation exchange membrane 210a from the first flow path 201 to move into the fourth flow path 204.

At the same time, hydrogen ions contained in the second storage solution (acidic solution) supplied to the second flow path 202 flow into the porous support 2201 of the cation-selective catalyst layer 2205b, and chloride ions do not flow into the porous support 2201 due to the catalyst layer 2205b, and instead pass through the anion exchange membrane 230 from the second flow path 202 and move into the third flow path 203.

Therefore, the hydroxide ions flowing into the porous support 2201 through the ion exchange resin layer on the first side of the bipolar electrode 220 and the hydrogen ions flowing into the porous support 2201 of the catalyst layer on the second side of the bipolar electrode 220 are synthesized into water and generate electricity.

**Third Embodiment**

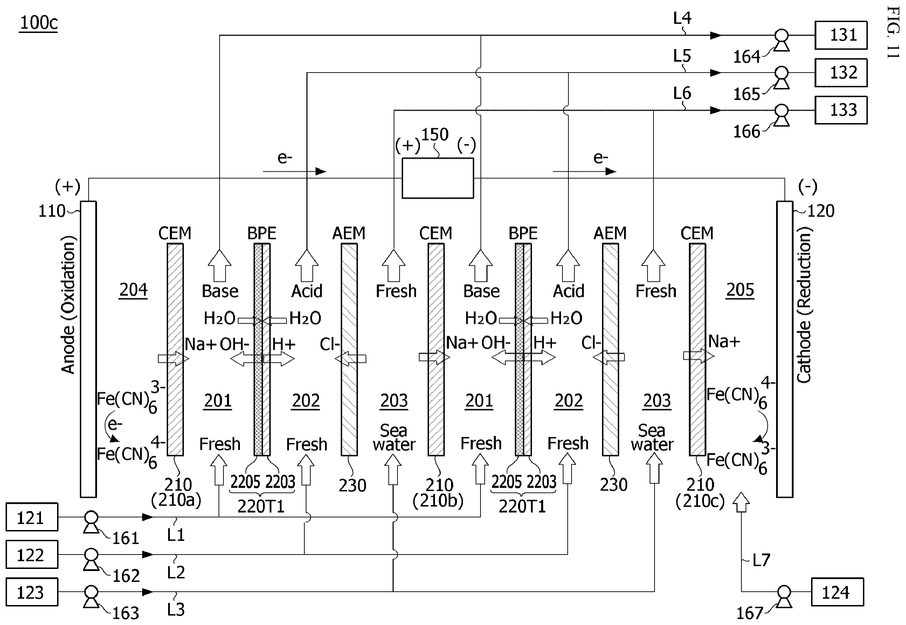

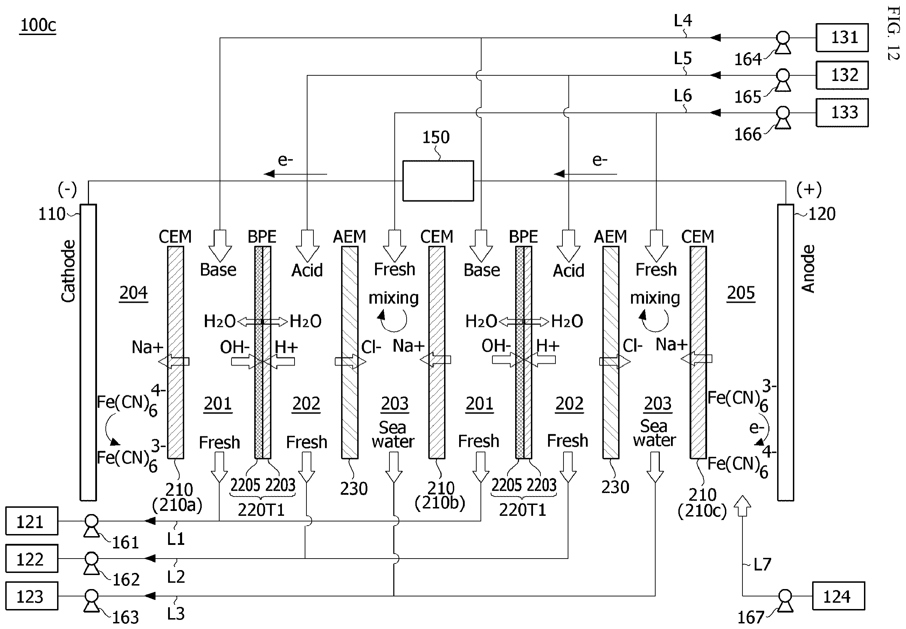

FIGS. 11 and 12 illustrate a blue battery 100c according to a third embodiment of the present invention. FIGS. 11 and 12 illustrate a structure in which the number of unit cells is increased in the blue battery according to the first embodiment. In the blue battery 100c according to the third embodiment, a plurality of cation exchange membranes 210, bipolar electrodes 220T1, and anion exchange membranes 230 are disposed between the first electrode 110 and the second electrode 120 so that the output density can be increased in the discharging mode (power generation mode).

Hereinafter, the same components as those in the blue batteries 100a and 100b according to the first and second embodiments described above are denoted by the same reference signs, and description thereof will be omitted, but the above-described content can be applied in the same manner.

Referring to FIGS. 11 and 12, first, second, and third cation exchange membranes 210a, 210b, and 210c are sequentially disposed between the first electrode 110 and the second electrode 120 in a direction from the first electrode to the second electrode. In this case, a bipolar electrode 220T1 and an anion exchange membrane 230 may be sequentially disposed between the first cation exchange membrane 210a and the second cation exchange membrane 210b and between the second and third cation exchange membranes 210b and 210c, so that a plurality of first, second, and third flow paths 201, 202, and 203 may be provided. In particular, ion exchange membranes disposed adjacent to the first and second electrodes 110 and 120 are the cation exchange membranes 210a and 210c.

As described above, in the blue battery 100c according to the third embodiment, it is possible to increase the number of unit cells in the blue battery 100a according to the first embodiment by sequentially disposing the bipolar electrode 220T1 and the anion exchange membrane 230 between the two cation exchange membranes 210 disposed adjacent to each other in the direction from the first electrode to the second electrode. Therefore, the bipolar electrode in the third embodiment may be the bipolar electrode 220T1 of the first type described above in the first embodiment.

In the third embodiment, a case where two triplet structures which are unit cell structures each including the cation exchange membrane, the bipolar electrode, the anion exchange membrane, and the cation exchange membrane are included has been illustrated, but an additional triplet structure may be included.

In this case, the first, second, and third flow paths may be fluidically connected to first, second, and third supply units, respectively. Further, the first, second, and third flow paths may be fluidically connected to first, second, and third storage units, respectively.

Further, a plurality of bipolar electrodes 220 (220T1 and 220T2) disposed in the blue battery according to the present invention are not electrically connected to the first and second electrodes. Further, the bipolar electrodes 220 (220T1 and 220T2) are not electrically connected to each other. Therefore, external power is not supplied to the bipolar electrodes 220 (220T1 and 2320T2). FIG. 11 is a diagram illustrating an operation in a charging mode of the blue battery 100c according to the third embodiment of the present invention, and since the charging mode is the same as the charging mode of the blue battery 100a according to the first embodiment described above, description thereof will be omitted.

However, since the plurality of bipolar electrodes 220 are disposed between the first electrode 110 and the second electrode 120, hydroxide ions (OH-) dissociated through the respective bipolar electrodes 220 move into the respective first flow paths 201, and hydrogen ions (H+) move into the respective second flow paths 202. Accordingly, an alkaline solution (NaOH) produced in each first flow path 201 is transferred to a first storage unit 131, and an acidic solution (HCl) produced in each second flow path 202 is transferred to a second storage unit 132.

Further, the fresh water produced in each third flow path 203 is transferred to a third storage unit 133.

Further, since a reaction occurring in the bipolar electrode in a charging mode of the blue battery according to the third embodiment is the same as that in the first embodiment, description thereof will be omitted.

FIG. 12 is a diagram illustrating an operation in a discharging mode (power generation mode) of the blue battery 100c according to the third embodiment of the present invention, and since the discharging mode is the same as the discharging mode of the blue battery 100a according to the first embodiment described above, description thereof will be omitted.

However, first, second, and third storage solutions are supplied from the first, second, and third storage units 131, 132, and 133 to the first, second, and third flow paths 201, 202, and 203, and hydroxide ions in a basic solution supplied to each first flow path 201 and hydrogen ions in an acidic solution supplied to each second flow path 202 flow into the porous support of each bipolar electrode 220 and are synthesized into water, thereby producing electricity at the plurality of electrodes.

Further, energy is generated as the sodium ions and the chloride ions moving into the plurality of third flow paths 203 due to a difference in ion concentration are mixed.

Since a reaction occurring in the bipolar electrode in the discharging mode of the blue battery according to the third embodiment is the same as that of the first embodiment, description thereof will be omitted. As described above, a voltage is generated in each bipolar electrode 220 due to a pH difference and an ion concentration difference, so that electricity can be produced.

## Fourth Embodiment

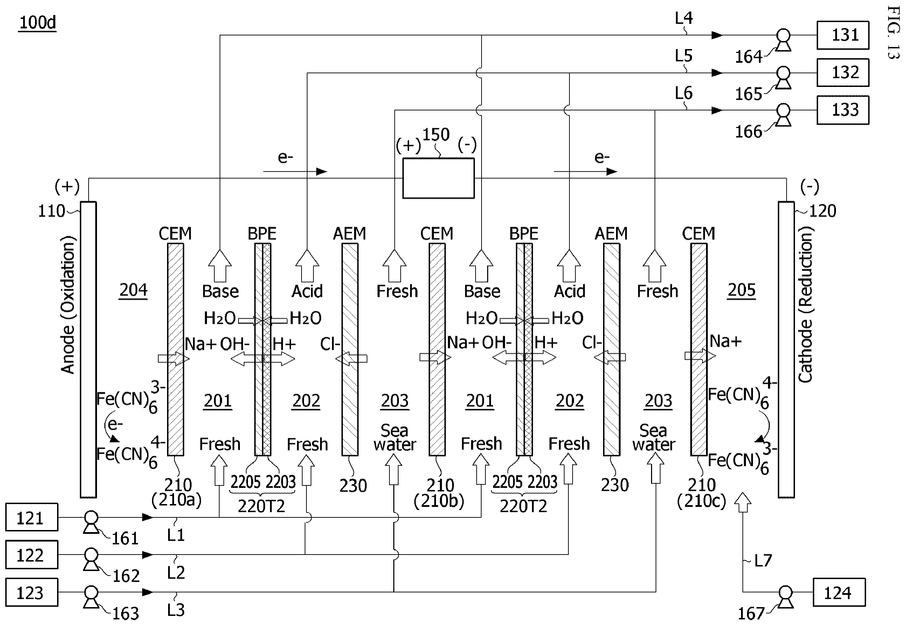

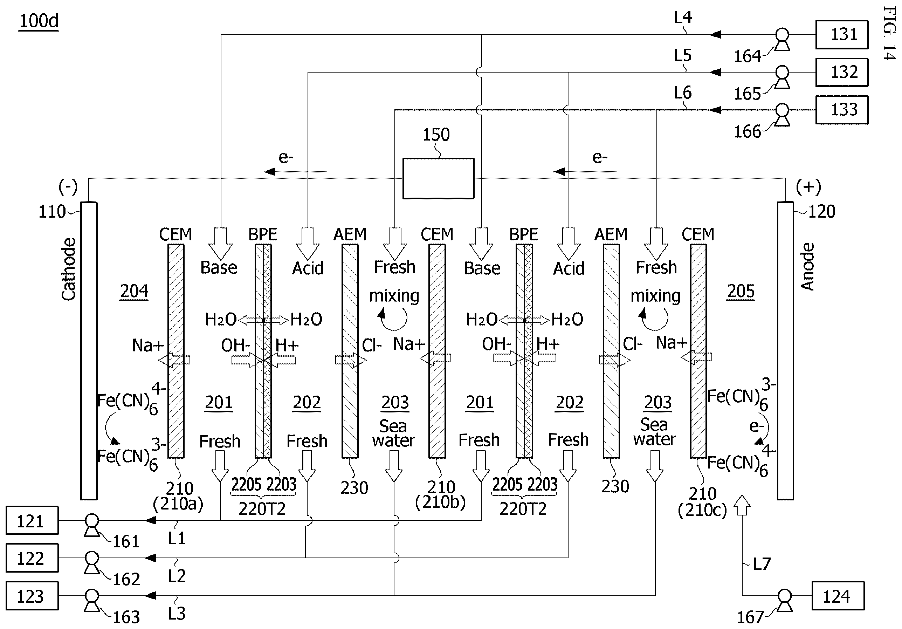

FIGS. 13 and 14 illustrate a blue battery 100d according to a fourth embodiment of the present invention. FIG. 13 illustrates a structure in which the number of unit cells is increased in the blue battery according to the second embodiment. In the blue battery 100d according to the fourth embodiment of the present invention, a plurality of cation exchange membranes 210, bipolar electrodes 220T2, and anion exchange membranes 230 are disposed between a first electrode 110 and a second electrode 120, thereby increasing the output density in the discharging mode (power generation mode).

Hereinafter, the same components as those of the blue batteries 100a, 100b, and 100c according to the first, second, and third embodiments described above are denoted by the same reference signs, and description thereof will be omitted, but the above-described content can be applied in the same manner.

Referring to FIGS. 13 and 14, first, second, and third cation exchange membranes 210a, 210b, and 210c are sequentially disposed between the first electrode 110 and the second electrode 120 in a direction from the first electrode to the second electrode. In this case, a bipolar electrode 220T2 and an anion exchange membrane 230 may be sequentially disposed between the first cation exchange membrane 210a and the second cation exchange membrane 210b and between the second and third cation exchange membranes 210b and 210c, thereby providing a plurality of first, second, and third flow paths 201, 202, and 203.

As described above, in the blue battery 100d according to the fourth embodiment, it is possible to increase the number of unit cells in the blue battery 100b according to the second embodiment by sequentially disposing the bipolar electrode 220T2 and the anion exchange membrane 230 between the two cation exchange membranes 210 disposed adjacent to each other in a direction from the first electrode to the second electrode. Therefore, the bipolar electrode in the fourth embodiment may be the bipolar electrode 220T2 of the second type described above in the second embodiment.

In the fourth embodiment, a case where the two triplet structures are included as in the third embodiment is illustrated, but an additional triplet structure may be included.

FIG. 13 is a diagram illustrating an operation in a charging mode of the blue battery 100d according to the fourth embodiment of the present invention, and since the charging mode is the same as the charging mode of the blue battery 100b according to the second embodiment described above, description thereof will be omitted, and the content described in the third embodiment can be applied in the same manner.

Further, since a reaction occurring at the bipolar electrode in the charging mode of the blue battery according to the fourth embodiment is the same as that in the second embodiment, description thereof will be omitted.

FIG. 14 is a diagram illustrating an operation in the discharging mode (power generation mode) of the blue battery 100d according to the fourth embodiment of the present invention, and since this is the same as the discharging mode of the blue battery 100b according to the second embodiment described above, description thereof will be omitted and the content described in the third embodiment can be applied in the same manner.

Further, since a reaction occurring at the bipolar electrode in the discharging mode of the blue battery according to the fourth embodiment is the same as that in the second embodiment, description thereof will be omitted. As described above, in each bipolar electrode 220, a voltage is generated due to the pH difference and the ion concentration difference so that electricity can be produced.

As described above, the blue batteries 100a, 100b, 100c, and 100d according to the first, second, third, and fourth embodiments of the present invention can produce higher energy than a reverse electrodialysis (RED) apparatus that generally generates power using a concentration difference because the blue batteries simultaneously produce energy generated due to the pH difference and energy generated due to the ion concentration difference in the discharging mode. Further, an energy potential of the blue batteries according to the first, second, third, and fourth embodiments of the present invention may be as shown in Formula 2 below.

[Formula 2]

$$E = \frac{n\alpha RT}{zF}\left[\ln\left(\frac{a_B^{Na^+}}{a_N^{Na^+}}\right) + \ln\left(\frac{a_A^{Cl^-}}{a_N^{Cl^-}}\right) + \ln\left(\frac{a_A^{H^+}}{a_N^{H^+}}\right) + \ln\left(\frac{a_A^{OH^-}}{a_N^{OH^-}}\right)\right]$$

$$\underbrace{\underbrace{Na^+}_{\substack{salinity\\ratio}} + \underbrace{Cl^-}_{\substack{salinity\\ratio}}}_{\substack{Concentration\\gradient}} + \underbrace{\underbrace{H^+}_{\substack{salinity\\ratio}} + \underbrace{OH^-}_{\substack{salinity\\ratio}}}_{\substack{pH\ gradient\\(Acid/Base\ Junction)}}$$

In particular, the bipolar electrode 220 (220T1 and 220T2) of the present invention may serve as an electrode that generates electricity by forming an electrochemical potential energy difference with an electrolyte flowing through an adjacent path under the influence of an electric field applied in a state in which the bipolar electrode is not connected to an external power supply via a conductor. In the blue battery according to the third and fourth embodiments, it is possible to stably increase the number of cells in the blue battery without electrical resistance by using the bipolar electrodes 220T1 and 220T2 and extend the lifespan of the blue battery.

As described above, the electrochemical potential energy of the blue battery may be calculated using a Nernst equation, and when the blue battery is charged using 0.5 M seawater, 57.6 kJ/mol of chemical energy (that is, electrochemical potential energy of 2 to 3 V) is stored between the cation electrolyte and the anion electrolyte. When this is converted to an equivalent head, the energy has an energy storage density equivalent to that when water is stored in a dam of about 2,500 m.

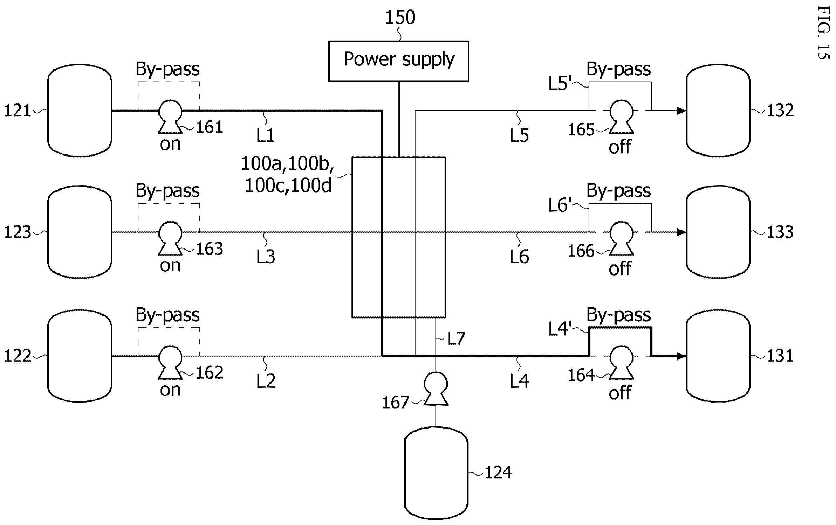

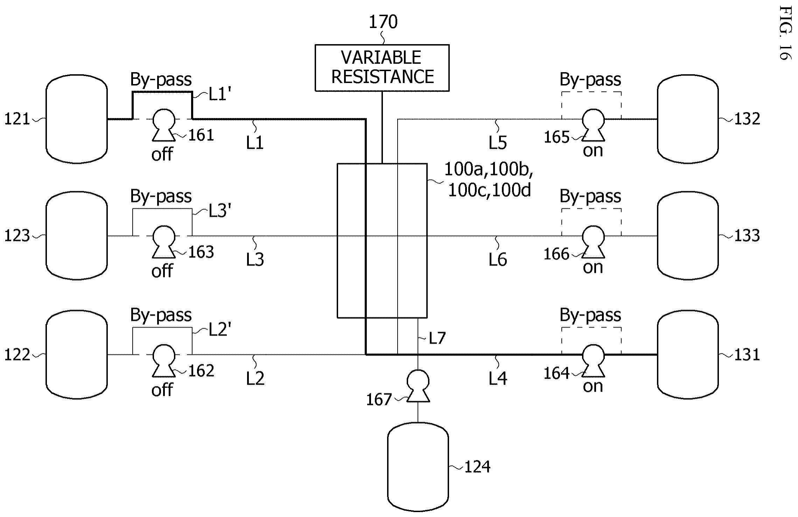

Meanwhile, FIGS. 15 and 16 are diagrams illustrating driving of the respective pumps in the charging mode and the discharging mode of the blue batteries 100a, 100b, 100c, and 100d according to the first, second, third, and fourth embodiments of the present invention.

Referring to FIG. 15, in the charging mode of the blue battery according to any of the first, second, third, and fourth embodiments of the present invention, the first, second, and third pumps 161, 162, and 163 are in an operating state, and the fourth, fifth, and sixth pumps 164, 165, and 166 are in a stopped state. Further, the pump 167 for circulation of the electrode solution is in an operating state.

Here, fourth, fifth, and sixth bypass lines L4', L5', and L6' branching from the fourth, fifth, and sixth lines L4, L5, and L6 and bypassing the fourth, fifth, and sixth pumps 164, 165, and 166 may be provided on the fourth, fifth, and sixth lines L4, L5, and L6. Therefore, in the charging mode, the first, second, and third pumps 161, 162, and 163 operate, the first, second, and third solutions are supplied to the blue battery along the first, second, and third lines L1, L2, and L3, and the produced first, second, and third storage solutions are stored in the first, second, and third storage units 131, 132, and 133 along the fourth, fifth, and sixth lines L4, L5, and L6 and the fourth, fifth, and sixth bypass lines L4', L5', and L6', respectively. In this case, the electrode solution may be circulated along a line (not shown) that is fluidically connected so that the electrode solution circulates through the fourth and fifth flow paths.

Referring to FIG. 16, in the blue batteries according to the first, second, third, and fourth embodiments of the present invention, in the discharging mode, the fourth, fifth, and sixth pumps 164, 165, and 166 are in an operating state, and the first, second, and third pumps 161, 162, and 163 are in a stopped state. Further, the pump 167 for circulation of the electrode solution is in an operating state. Here, the first, second, and third bypass lines L4', L5', and L6' branching from the first, second, and third lines L1, L2, and L3 and bypassing the first, second, and third pumps 161, 162, and 163 may be provided on the first, second, and third lines L1, L2, and L3.

Therefore, in the discharging mode, the fourth, fifth, and sixth pumps 164, 165, and 166 operate so that the first, second, and third storage solutions are supplied to the blue battery 100 along the fourth, fifth, and sixth lines L4, L5, and L6 to generate power, and the regenerated first, second, and third solutions are stored in the first, second, and third supply units 121 to 123 along the first, second, and third lines L1, L2, and L3 and the first, second, and third bypass lines L1', L2', and L3', respectively. In this case, the electrode solution may be circulated through a line (not shown) that is fluidically connected to circulate through the fourth and fifth flow paths.

In the discharging mode, a variable resistance device 170 may be electrically connected to the above-described blue battery to maximize an output that is produced by the blue battery.

In particular, since substance movement speeds of the sodium ions and the chloride ions vary depending on characteristics of the ion exchange membranes (the cation exchange membrane and the anion exchange membrane) disposed inside the blue battery, a difference arises in pH balance between acids and bases when the storage solutions are supplied at the same flow rate. Therefore, based on the characteristics of the cation exchange membrane and anion exchange membrane and a substance movement speed according to the characteristics, the first, second, and third storage solutions can be supplied at flow rates adjusted through the fourth, fifth, and sixth pumps, thereby adjusting a pH balance.

Since there is an optimal flow rate for maximizing the output in the blue batteries 100a, 100b, 100c, and 100d, the first, second, and third storage solutions can be supplied according to the optimal flow rate by flow rates of the respective solutions being adjusted through the respective connected pumps. Therefore, the first, second, and third storage solutions can be supplied at different flow rates, and in particular, the acidic solution and the basic solution can be supplied at different flow rates.

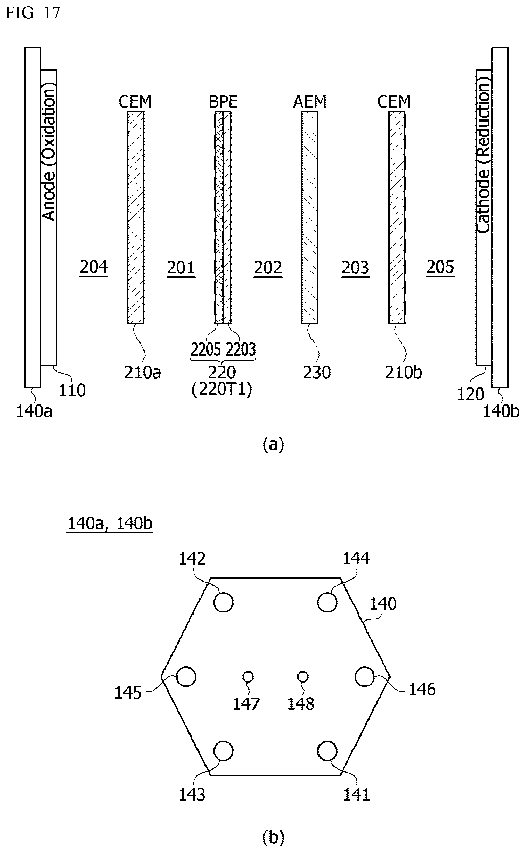

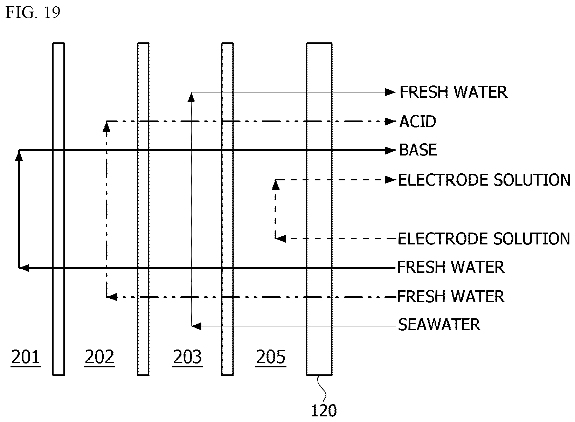

Meanwhile, FIGS. 17 to 19 are diagrams illustrating a structure of a stack unit of the blue batteries 100a, 100b, 100c, and 100d according to the first, second, third, and fourth embodiments of the present invention.

Referring to FIGS. 17 to 19, the blue battery according to any of the first, second, third, and fourth embodiments of the present invention may be provided in a hexagonal structure. In this case, respective end plates 140 (140a and 140b) may be provided in a hexagonal structure to surround the first and second electrodes 110 and 120.

Each of the end plates 140a and 140b includes a pair of first inlet and outlet ports 141 and 142, a pair of second inlet and outlet ports 143 and 144, and a pair of third inlet and outlet ports 145 and 146 disposed to face each other.

Further, the first, second, and third inlet and outlet ports in the pairs may be sequentially disposed at predetermined intervals from each other in a circumferential direction. Further, each of the end plates 140a and 140b includes fourth inlet and outlet ports 147 and 148 through which the electrode solution is supplied and discharged, at a central portion.

The first inlet port 141 is fluidically connected to the first supply unit 121 and the first flow path 201. The first outlet port 142 is fluidically connected to the first flow path 201 and the first storage unit 131.

That is, in the charging mode, the first solution from the first supply unit 121 is supplied through the first inlet port 141, and the first storage solution, which is produced during passage through the first flow path, is discharged through the first outlet port 142 and stored in the first storage unit 131. On the other hand, in the discharging mode, the first storage solution from the first storage unit 131 is supplied through the first outlet port 142, and the first solution, which is regenerated during passage through the first flow path, is discharged through the first inlet port 141 and stored in the first supply unit 121.

Further, the second inlet port 143 is fluidically connected to the second supply unit 122 and the second flow path 202. The second outlet port 144 is fluidically connected to the second flow path 202 and the second storage unit 132.

That is, in the charging mode, the second solution from the second supply unit 122 is supplied through the second inlet port 143, and the second storage solution, which is produced during passage through the second flow path, is discharged through the second outlet port 144 and stored in the second storage unit 132. On the other hand, in the discharging mode, the second storage solution from the second storage unit 132 is supplied through the second outlet port 144, and the second solution, which is regenerated during passage through the second flow path, is discharged through the second inlet port 143 and stored in the second supply unit 122.

Further, the third inlet port 145 is fluidically connected to the third supply unit 123 and the third flow path 203. The third outlet port 146 is fluidically connected to the third flow path 203 and the third storage unit 133.

That is, in the charging mode, the third solution from the third supply unit 123 is supplied through the third inlet port 145, and the third storage solution, which is produced during passage through the third flow path, is discharged through the third outlet port 146 and stored in the third storage unit 133. On the other hand, in the discharging mode, the third storage solution from the third storage unit 133 is supplied through the third outlet port 146, and the third solution, which is regenerated during passage through the third flow path, is discharged through the third inlet port 145 and stored in the third supply unit 123. Further, the fourth inlet port 147 and the fourth outlet port 148 are fluidically connected to the electrode solution supply unit 124.

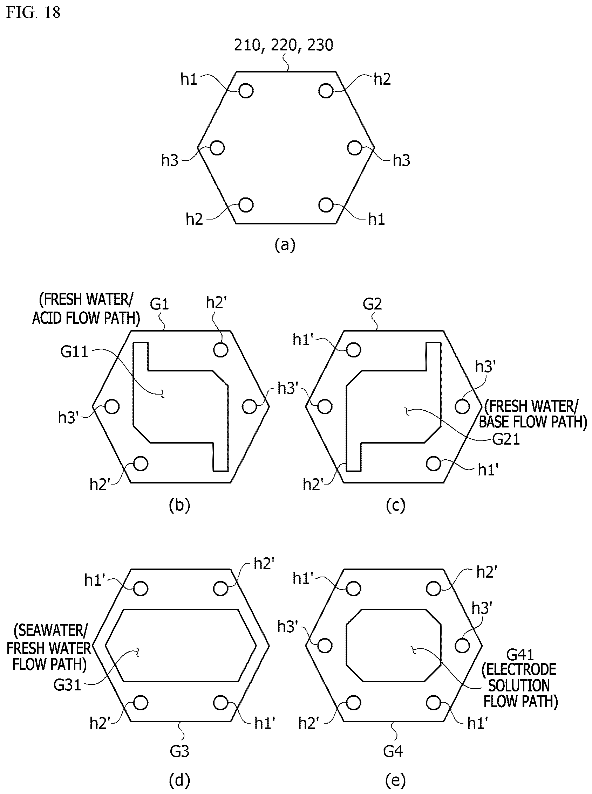

Referring to FIG. 18, the cation exchange membrane 210, the bipolar electrode 220, and the anion exchange membrane 230 may be provided to have a hexagonal structure like an end plate.

The cation exchange membrane 210, the bipolar electrode 220, and the anion exchange membrane 230 may be provided with pairs of flow holes h1, h2, and h3 for fluid movement at positions corresponding to the first, second, and third inlet and outlet ports. In particular, a first gasket G1 for forming a first flow path between the cation exchange membrane and the bipolar electrode includes a first flow guide G11 provided to fluidically connect the flow holes h1 provided at positions corresponding to the first inlet and outlet ports, and through holes h2' and h3' fluidically connected to the other flow holes h2 and h3.

Further, a second gasket G2 for forming the second flow path between the bipolar electrode and the anion exchange membrane includes a second flow guide G21 provided to fluidically connect the flow holes h2 provided at positions corresponding to the second inlet and outlet ports, and through holes h1' and h3' fluidically connected to the other flow holes h1 and h3.

Further, a third gasket G3 for forming the third flow path between the anion exchange membrane and the cation exchange membrane includes a third flow guide G31 provided to fluidically connect the flow holes h3 provided at positions corresponding to the third inlet and outlet ports, and through holes h1' and h2' fluidically connected to the other flow holes h1 and h2.

Further, an electrode portion gasket G4 for forming the fourth flow path and the fifth flow path between the cation exchange membrane and the first electrode and between the cation exchange membrane and the second electrode includes an electrode solution guide portion G41 provided to be fluidically connected to the fourth inlet and outlet ports, and through holes h1', h2', and h3' fluidically connected to the other flow holes h1, h2, and h3.

When the stack unit is configured as described above, it is possible to obtain a high output density while maintaining a maximum concentration difference energy with respect to the ion exchange membrane, and to dispose the maximum number of unit stacks within a given space, thereby maximizing a space utilization rate when a large-capacity blue battery is constructed.

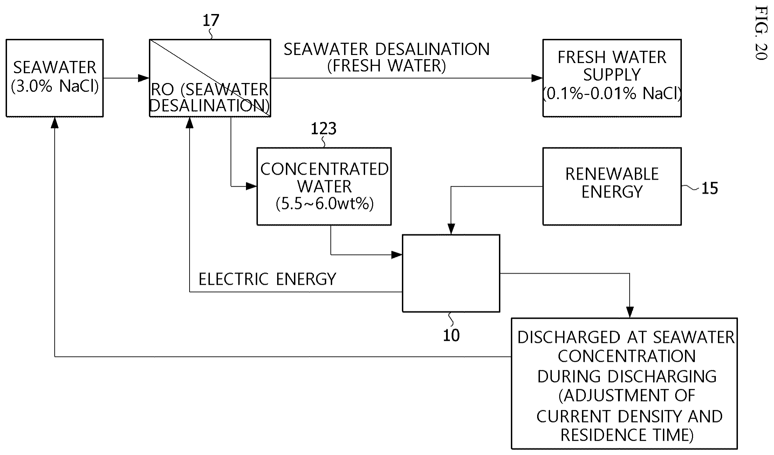

Meanwhile, FIG. 20 is a diagram illustrating an apparatus or process for discharging concentrated water (salt water), which is integrated with any of the blue batteries 10 (100a, 100b, 100c, and 100d) according to the first, second, third, and fourth embodiments of the present invention and is a diagram illustrating, for example, a system integrated with a seawater desalination system (RO).

Referring to FIG. 20, the blue batteries 10 (100a, 100b, 100c, and 100d) according to the first, second, third, and fourth embodiments of the present invention may be integrated with the apparatus or process for discharging concentrated water (salt water), and for example, may be integrated with a seawater desalination system 17 to supply concentrated water (salt water) discharged from the seawater desalination system 17 to the third flow path 203 as the third solution.

The present invention can be applied to any apparatus or process for discharging concentrated water during a desalination or purification process of water treatment and pharmaceutical processes, in addition to the seawater desalination system 17. For example, the seawater desalination system 17 may be fluidically connected to the third supply unit 123 to supply the concentrated water to the third supply unit 123.

Further, fresh water discharged from the seawater desalination system 17 may be transported and supplied to a place where the fresh water is needed, or although not shown, the seawater desalination system 17 may be fluidically connected to the first and second supply units 121 and 122 to supply fresh water to the first and second supply units 121 and 122.

As described above, in the charging mode of the blue battery according to any of the first, second, third, and fourth embodiments of the present invention, when the concentrated water is supplied as the third solution, there is an advantage in that the capacity of produced positive electrolyte (NaOH) and negative electrolyte (HCl) increases as a larger amount of sodium ions and chloride ions move into the first and second flow paths during passage through the third flow path 203, thereby increasing the energy storage capacity. As described above, when the concentrated water is supplied as the third solution, the concentrated water is discharged at a concentration of the seawater in the discharging mode, and the discharged seawater is supplied again to the seawater desalination system 17 so that the concentrated water and fresh water can be produced and used.

Further, the power produced by the above-described blue battery may be supplied to the seawater desalination system 17 to drive the seawater desalination system 17 without using additional energy. Further, calcium (Ca), magnesium (Mg), and the like contained in the positive electrolyte dissociated from the seawater in the above-described blue battery can reduce carbon dioxide through a carbonate mineralization process in association with a carbon dioxide capture and storage apparatus.

According to the present invention, there is an advantage in that it is possible to dissociate water contained in the fresh water into hydrogen ions and hydroxide ions using seawater and fresh water, thereby chemically storing energy as a positive electrolyte and a negative electrolyte, and to produce energy through an acid-base reaction by supplying the positive electrolyte and the negative electrolyte, and produce energy using a concentration difference between the fresh water and the positive electrolyte and the fresh water and the negative electrolyte, when necessary.

Further, since the hydrogen ions and hydroxide ions of the water are dissociated based on a polarization phenomenon of the catalyst particles (conductive particles) and the porous support when the water contained in the fresh water is decomposed through the bipolar electrode of the present invention, there is an advantage in that it is possible to maximize an effective region for producing the hydrogen ions and the hydroxide ions, and to produce acids and bases in a charging process without increasing electrical resistance.

In particular, in the related art, when water is decomposed through a bipolar membrane, a problem occurs in which the bipolar membrane is peeled off, whereas in the present invention, such a problem of peeling does not occur since water contained in fresh water is decomposed through a bipolar electrode.

**Claims**

1. A blue battery for energy storage comprising:

a first electrode and a second electrode electrically connected to the first electrode;

first and second cation exchange membranes disposed sequentially between the first electrode and the second electrode in a direction from the first electrode to the second electrode;

an anion exchange membrane disposed between the first cation exchange membrane and the second cation exchange membrane;

a bipolar electrode disposed between the first cation exchange membrane and the anion exchange membrane, the bipolar electrode including a catalyst layer facing any one of the first cation exchange membrane and the anion exchange membrane, and an ion exchange resin layer facing the other of the first cation exchange membrane and the anion exchange membrane;

a first flow path provided between the first cation exchange membrane and the bipolar electrode;

a second flow path provided between the bipolar electrode and the anion exchange membrane; and

a third flow path provided between the anion exchange membrane and the second cation exchange membrane.

2. The blue battery for energy storage of claim 1, further comprising:

a fourth flow path provided between the first electrode and the first cation exchange membrane, and a fifth flow path provided between the second electrode and the second cation exchange membrane;

a first supply unit fluidically connected to the first flow path and provided to supply a first solution containing water to the first flow path;

a second supply unit fluidically connected to the second flow path and provided to supply a second solution containing water to the second flow path;

a third supply unit fluidically connected to the third flow path and provided to supply a third solution having a different salt concentration from the first and second solutions and containing an ionic substance to the third flow path;

an electrode solution supply unit provided to supply an electrode solution to the fourth or fifth flow path;

first, second, and third storage units fluidically connected to the first, second, and third flow paths and provided to store first, second, and third storage solutions produced during passage through the first, second, and third flow paths; and

a power supply unit provided to supply direct current power to the first and second electrodes, wherein

the fourth flow path and the fifth flow path are fluidically connected to circulate the electrode solution.

3. The blue battery for energy storage according to claim 2, wherein

in a charging mode, the power is supplied to the first and second electrodes,

the first, second, and third supply units and the electrode solution supply unit supply the first, second, and third solutions and the electrode solution to the respective paths, and

the produced first, second, and third storage solutions are transferred to and stored in the first, second, and third storage units.

4. The blue battery for energy storage of claim 3, wherein, in the charging mode, a polarity opposite to that of the first electrode is induced on a side of the bipolar electrode facing the first electrode, and a polarity opposite to that of the second electrode is induced on a side of the bipolar electrode facing the second electrode.

5. The blue battery for energy storage of claim 4, wherein

the catalyst layer of the bipolar electrode includes a plurality of catalyst particles supported on a porous support, and

in the charging mode, water molecules are dissociated into hydrogen ions and hydroxide ions due to a polarization phenomenon occurring on a surface of each catalyst particle.

6. The blue battery for energy storage of claim 5, wherein, in the charging mode, on the surface of each catalyst particle, a region facing the first electrode and a region facing the second electrode have different polarities to induce a polarization phenomenon.

7. The blue battery for energy storage of claim 5, wherein

the catalyst layer of the bipolar electrode is disposed to face the first cation exchange membrane,

ion exchange resin layer is disposed to face the anion exchange membrane, and

the ion exchange resin layer is provided as a cation exchange resin layer having cation selectivity.

8. The blue battery for energy storage of claim 5, wherein

the catalyst layer of the bipolar electrode is disposed to face the anion exchange membrane,
the ion exchange resin layer is disposed to face the first cation exchange membrane, and
the ion exchange resin layer is provided as an anion exchange resin layer having anion selectivity.

9. The blue battery for energy storage of claim 5, wherein, in the charging mode,

in the first flow path, the first storage solution is produced by hydroxide ions dissociated from the water contained in the first solution through the bipolar electrode and cations moved by passing through the first cation exchange membrane, and transferred to the first storage unit,
in the second flow path, the second storage solution is produced by hydrogen ions dissociated from the water contained in the second solution through the bipolar electrode and anions moved by passing through the anion exchange membrane, and transferred to the second storage unit, and
in the third flow path, the third storage solution whose salt concentration decreases as the ionic substance contained in the third solution passes through the anion exchange membrane and the second cation exchange membrane and moves to adjacent flow paths is produced and transferred to the third storage unit.

10. The blue battery for energy storage of claim 5, wherein,

in a discharge mode, power supply to the first and second electrodes is stopped,
the first, second, and third storage units and the electrode solution supply unit supply the first, second, and third storage solutions and the electrode solution to the respective flow paths, and
the first, second, and third solutions regenerated during passage of the first, second, and third storage solutions through the respective flow paths are transferred to the first, second, and third supply units.

11. The blue battery for energy storage of claim 5, wherein, in a discharge mode,

in the first flow path, hydroxide ions contained in the first storage solution produce water through the bipolar electrode, cations pass through the first cation exchange membrane and move into the adjacent flow path, and the first solution is regenerated during passage through the first flow path and resupplied to the first supply unit,
in the second flow path, hydrogen ions contained in the second storage solution produce water through the bipolar electrode, anions
pass through the anion exchange membrane and move into the adjacent flow path, and the second solution is regenerated during passage through the second flow path and resupplied to the second supply unit, and
in the third flow path, the cations and anions moved from adjacent flow paths are supplied, and the third solution whose salt concentration becomes higher than the third storage solution during passage through the third flow path is regenerated and resupplied to the third supply unit.

12. The blue battery for energy storage of claim 2, wherein,

in a charging mode, cations passing through the second cation exchange membrane from the third flow path move to the fifth flow path,
in a discharging mode, cations passing through the first cation exchange membrane from the first flow path move to the fourth flow path, and
cations incorporated into the electrode solution circulate through the fourth and fifth flow paths.

13. The blue battery for energy storage of claim 3, wherein, in the charging mode, a positive voltage is applied to the first electrode and a negative voltage is applied to the second electrode.

14. The blue battery for energy storage of claim 2, wherein the third solution is concentrated water discharged in a desalination or purification process of seawater desalination, water treatment, and pharmaceutical processes.

15. The blue battery for energy storage of claim 1, wherein

the bipolar electrode includes a porous conductive support having pores formed therein, and

the catalyst layer and the ion exchange resin layer are provided on the porous conductive support.

FIG. 1

FIG. 2

<u>100a</u>

FIG. 3

<u>100a</u>

FIG. 4

<u>220</u>

(a)                    (b)

FIG. 5

FIG. 6

FIG. 7

100b

FIG. 8

<u>100b</u>

FIG. 9

FIG. 10

FIG. 11

FIG. 12

FIG. 13

FIG. 14

100d

EP 4 708 416 A1

34

FIG. 15

FIG. 16

FIG. 17

Anode (Oxidation)

CEM  BPE  AEM  CEM

204  201  202  203  205

110  210a  2205 2203  230  210b  120

220
(220T1)

140a  140b

Cathode (Reduction)

(a)

140a, 140b

142  144

140

145  146

147  148

143  141

(b)

FIG. 18

210, 220, 230

h1 — h2

h3 — h3

h2 — h1

(a)

(FRESH WATER/ ACID FLOW PATH)   G1   h2'

G11

h3' — h3'

h2'

(b)

G2   h1'

h3'

(FRESH WATER/ BASE FLOW PATH)

G21

h2' — h1'

(c)

h1' — h2'

(SEAWATER/ FRESH WATER FLOW PATH)

G31

h2' — h1'

G3

(d)

h1' — h2'

h3' — h3'

G41 (ELECTRODE SOLUTION FLOW PATH)

h2' — h1'

G4

(e)

FIG. 19

FRESH WATER
ACID
BASE
ELECTRODE SOLUTION

ELECTRODE SOLUTION

FRESH WATER

FRESH WATER

SEAWATER

201    202    203    205

120

FIG. 20

SEAWATER
(3.0% NaCl)

RO (SEAWATER
DESALINATION)  17

SEAWATER DESALINATION
(FRESH WATER)

FRESH WATER
SUPPLY
(0.1%-0.01% NaCl)

CONCENTRATED
WATER
(5.5~6.0wt%)  123

RENEWABLE
ENERGY  15

ELECTRIC ENERGY

10

DISCHARGED AT SEAWATER
CONCENTRATION
DURING DISCHARGING
(ADJUSTMENT OF
CURRENT DENSITY AND
RESIDENCE TIME)

## INTERNATIONAL SEARCH REPORT

International application No.

**PCT/KR2024/005539**

| A. | CLASSIFICATION OF SUBJECT MATTER |
|---|---|

H01M 8/22(2006.01)i; H01M 14/00(2006.01)i

According to International Patent Classification (IPC) or to both national classification and IPC

| B. | FIELDS SEARCHED |
|---|---|

Minimum documentation searched (classification system followed by classification symbols)

H01M 8/22(2006.01); B01J 47/12(2006.01); C08J 5/22(2006.01); C25B 1/04(2006.01); H01M 14/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 블루배터리(blue battery), 해수(seawater), 에너지 저장장치(energy storage system), 복극전극(bipolar electrode), 이온교환막(ion exchange membrane), 충전(charge), 방전(discharge), 촉매층(catalyst layer), 전도성 지지체(conductive support)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | PARNAMAE, R. et al. The Acid–Base Flow Battery: Sustainable Energy Storage via Reversible Water Dissociation with Bipolar Membranes. Membranes. 2020, vol. 10, article no. 409, pp. 1-20. See pages 4 and 16; and figure 2. | 1-14 |
| A | | 15 |
| Y | EP 3444295 A1 (ASTOM CORPORATION) 20 February 2019 (2019-02-20) See paragraphs [0075] and [0101]. | 1-14 |
| Y | VAN EGMOND, W. J. et al. Performance of an environmentally benign acid base flow battery at high energy density. International Journal of Energy Research. 2018, vol. 42, pp. 1524-1535. See page 1527, left column. | 7 |
| A | KR 10-2023-0028986 A (NIST(ULSAN NATIONAL INSTITUTE OF SCIENCE AND TECHNOLOGY)) 03 March 2023 (2023-03-03) See entire document. | 1-15 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 August 2024** | **28 August 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

<table>
<tr><td colspan="2">International application No.</td></tr>
<tr><td colspan="2">**PCT/KR2024/005539**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | KR 10-2022-0078185 A (KOREA INSTITUTE OF ENERGY RESEARCH) 10 June 2022 (2022-06-10)<br>See entire document. | 1-15 |

INTERNATIONAL SEARCH REPORT
Information on patent family members

International application No.

**PCT/KR2024/005539**

| Patent document cited in search report | | | Publication date (day/month/year) | Patent family member(s) | | | Publication date (day/month/year) |
|---|---|---|---|---|---|---|---|
| EP | 3444295 | A1 | 20 February 2019 | CN | 109071852 | A | 21 December 2018 |
| | | | | CN | 109071852 | B | 01 June 2021 |
| | | | | JP | 2017-190417 | A | 19 October 2017 |
| | | | | JP | 6166814 | B1 | 19 July 2017 |
| | | | | KR | 10-2018-0134869 | A | 19 December 2018 |
| | | | | KR | 10-2280002 | B1 | 21 July 2021 |
| | | | | US | 2019-0118144 | A1 | 25 April 2019 |
| | | | | US | 2023-0067288 | A1 | 02 March 2023 |
| | | | | WO | 2017-179672 | A1 | 19 October 2017 |
| KR | 10-2023-0028986 | A | 03 March 2023 | KR | 10-2630848 | B1 | 29 January 2024 |
| KR | 10-2022-0078185 | A | 10 June 2022 | KR | 10-2433995 | B1 | 19 August 2022 |
| | | | | WO | 2022-119407 | A1 | 09 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2024005539 W